# EUROPÄISCHE PATENTSCHRIFT

(11) **EP 2 772 640 B1**
(45) Veröffentlichungstag und Bekanntmachung des Hinweises auf die Patenterteilung: **16.12.2015**
(21) Anmeldenummer: 13004358.1
(22) Anmeldetag: 05.09.2013
(51) Int. Cl.: F02M 25/022, F02D 19/08, F02D 41/00

(54) **Verfahren und Vorrichtung zum Betrieb eines Dieselmotors mit Emulsionskraftstoffen variabler Zusammensetzung**
Method and device for operating a diesel engine with emulsion fuels of variable composition
Procédé et dispositif de fonctionnement d'un moteur diesel avec des carburants émulsifiés de composition variable

(30) Priorität: 01.03.2013 DE 102013003382; 09.08.2013 EP 13003990
(43) Veröffentlichungstag der Anmeldung: 03.09.2014
(73) Patentinhaber: Taniel, Roman, 23820 Pronstorf (DE)
(72) Erfinder: Taniel, Roman, 23820 Pronstorf (DE)
(74) Vertreter: Von Rohr Patentanwälte Partnerschaft mbB

(56) Entgegenhaltungen:
- EP-A1- 2 372 133
- DE-A1- 4 412 965
- DE-B4-102005 044 046

## Beschreibung

Die Erfindung betrifft ein Verfahren zum Betrieb eines Dieselmotors mit einer Wasser-Dieselkraftstoff-Emulsion gemäß dem Oberbegriff des Anspruchs 1. Weiter betrifft die vorliegende Erfindung eine Emulgiervorrichtung gemäß dem Oberbegriff des Anspruchs 8.

### HINTERGRUND DER ERFINDUNG

Die dieselmotorische Verbrennung ist dadurch gekennzeichnet, dass ein selbstzündungswilliger Kraftstoff unter sehr hohem Druck durch eine Einspritzdüse in eine im Kolben angeordnete Brennraummulde eingespritzt wird. Nach der Zerstäubung und Verdampfung des Kraftstoffes in der durch die Verdichtung auf hohe Temperaturen erhitzten Verbrennungsluft, findet eine Vermischung der bereits verdampften Kraftstoffteile mit der Verbrennungsluft statt. Diese Gemischbildung wird zum einen durch eine Verteilung des Kraftstoffes mittels 6- bis 8-Loch-Einspritzdüsen, zum anderen durch einen in den Einlasskanälen generierten Luftdrall erreicht. Anschließend findet die chemische Aufbereitung des Kraftstoff-Luftgemisches durch Crackvorgänge der relativ langen Kraftstoffmoleküle sowie die Bildung von aktiven Radikalen statt. Ist die Konzentration aktiver Radikale ausreichend hoch, beginnt die Selbstzündung des Kraftstoff-Luftgemisches in Form einer Kettenreaktion. Die für die physikalischen und chemischen Gemischbildungsvorgänge erforderliche Zeit wird als Zündverzugszeit bezeichnet. Aufgrund der durch die direkte Einspritzung des Kraftstoffes und der damit kurzen für die Gemischbildung zur Verfügung stehenden Zeit, läuft die weitere Verbrennung in einem KraftstoffLuftgemisch mit örtlich inhomogener Kraftstoffverteilung ab. Die Entflammungsphase dieses "inhomogenen" Kraftstoff-Luftgemisches ist durch das Auftreten von "Zündkeimen" in bereits zündfähigen Gemischbereichen gekennzeichnet. Im weiteren Verbrennungsablauf reagieren zunächst die zu Beginn der Kraftstoffeinspritzung in die komprimierte heiße Verbrennungsluft gelangte Kraftstofftröpfchen, für die dadurch eine relativ lange Zeit zur Gemischaufbereitung zur Verfügung steht. Diese auch als Verbrennung von "vorgemischtem" Gemisch bezeichnete Verbrennungsphase ist auf Grund relativ schnell ablaufender Verbrennungsreaktionen, durch höhere Verbrennungstemperaturen und damit höhere thermische Stickoxidbildung und geringere Rußbildung gekennzeichnet. Während dieser ersten Verbrennungsphase wird jedoch nur ein durch die Länge der Zündverzugszeit bestimmter Teil des Kraftstoff-Luftgemisches verbrannt. Die restliche von der geforderten Motorlast abhängige Gemischmenge, die zum Zeitpunkt des Verbrennungsbeginns noch nicht zündfähig ist, wird erst im weiteren Verlauf des Verbrennungsvorganges durch stark ansteigende Gastemperaturen und eine intensive Ladungsbewegung aufbereitet und verbrennt dann zum Teil unter Luftmangel mit relativ geringer Verbrennungsgeschwindigkeit. Diese auch als "diffusionsgesteuerte"Verbrennung bezeichnete Verbrennungsphase ist durch eine bei örtlichem Luftmangel zunächst auftretende Rußbildung und anschließende, nicht vollständige Rußnachoxidation bei gleichzeitig geringerer Stickoxidbildung gekennzeichnet.

Aus den verschiedenen Phasen des Verbrennungsablaufs und den entsprechenden Mechanismen der Schadstoffbildung ergibt sich ein für die dieselmotorische Verbrennung typischer Zusammenhang zwischen den Stickoxid- und Rußemissionen, die man auch als NOx-Partikel trade-off bezeichnet. Dieser NOx-Partikel Zusammenhang besagt, dass bei Abstimmung der Motorbetriebsparameter z.B. des Einspritzzeitpunktes, auf niedrige NOx-Emissionen gleichzeitig ein Anstieg der Ruß-/Partikelemissionen unvermeidbar ist.

Zur Einhaltung der gesetzlich vorgeschriebenen Schadstoffemissionen von Dieselmotoren werden sowohl innermotorische Maßnahmen als auch Abgasnachbehandlungsverfahren angewendet. Zu den innermotorischen Maßnahmen gehören als wichtigste Maßnahme zur Verbesserung der Kraftstoff-Luftgemischbildung der Einsatz von Hochdruckeinspritzsystemen, die Einspritzdrücke von mehr als 200 MPa ermöglichen. Der dadurch erreichte verbesserte Zerfall des Einspritzstrahls in kleinere Kraftstofftröpfchen führt zu einer verbesserten Vermischung des Kraftstoffes mit der Verbrennungsluft und damit zu weniger überfetteten Gemischzonen und entsprechend deutlich geringeren Ruß- bzw. Partikelemissionen. Die somit intensivierte Gemischbildung hat auf Grund höherer Verbrennungstemperaturen entsprechend höhere NOx-Emissionen zur Folge, die durch einen vergrößerten Luftüberschuss mittels erhöhter Aufladedrücke sowie optimierte Einspritzmengenverläufe vermieden werden sollen. Eine weitere Maßnahme besteht in der zunehmend auch bei schweren Nutzfahrzeugmotoren eingesetzten Abgasrückführung (AGR). Allerdings sind der Abgasrückführrate und damit auch der möglichen NOx-Reduzierung auf Grund abnehmenden Sauerstoffgehaltes in der Verbrennungsluft Grenzen durch wieder ansteigende Ruß- bzw. Partikelemissionen gesetzt.

Da die beschriebenen innermotorischen Maßnahmen zur Schadstoffminderung nicht ausreichen die Abgasgrenzwerte zu unterschreiten, werden bei neu zugelassenen Nutzfahrzeugmotoren, die die Schadstoffklassen Euro 5 und Euro 6 erfüllen müssen, DeNOX-Katalysatorsysteme mit Harnstoff als Reduzierungsmittel und vereinzelt von Dieselmotoren für den Einsatz in Personenkraftwagen bekannte Partikelfiltersysteme eingesetzt Um die Emissionsziele zu erreichen, ist das Rohemissionsverhalten des Dieselmotors an die verwendeten Abgasnachbehandlungssysteme anzupassen. So wird bei typischen Euro 5 Dieselmotoren die Partikelemission durch flexibel abstimmbare Common-Rail (CR-) Einspritzsysteme mit 160 bis 180 MPa Einspritzdruck auf die entsprechenden Grenzwerte reduziert, während die Stickoxidemission meist durch den Einsatz eines harnstoffbasierten DeNOx-Systems ausreichend reduziert. Teilweise wird die NOx-Emission auch durch eine Kombination von Abgasrückführung und nachgeschaltetem DeNOx-System reduziert. Welche wirtschaftlich vertretbare Verfahrenskombination angewendet wird, hängt im Wesentlichen von der Rohemission eines Dieselmotors ab. Bei Dieselmotoren der Emissionsstufe Euro 6 sind die Anwendung weiter optimierter Elnspritzsysteme mit Einspritzdrücken von 200 MPa und mehr zur weiteren Absenkung der Partikelemissionen, sowie effizienterer AGR-DeNOx-Systemkombinationen erforderlich. Insbesondere ist der Einsatz von AGR-Systemen mit deutlich höheren AGR-Raten sowie von DeNOx-Systemen mit NOx-Konvertierungsraten von bis zu 90 Prozent erforderlich. Sind die NOx-Emissionsgrenzwerte durch den beschriebenen Einsatz von AGR und DENOx-Systemen nicht einzuhalten, ist die zusätzliche Anwendung eines Partikelfiltersystems mit entsprechend angepasster Abstimmung von AGR- und DeNOx-System unvermeidbar.

Somit ist festzustellen, dass die für schwere Nutzfahrzeugmotoren gültige Emissionsstufe Euro 5 und besonders Euro 6 nur mit erheblichem technischem und wirtschaftlichem Mehraufwand erreicht werden kann. Bei allen Verfahrenskombinationen zur Reduzierung der NOx- und Partikelemissionen ist, durch katalysatorbedingt erhöhten Abgasgegendruck und gegebenenfalls notwendige Anpassungsmaßnahmen des Verbrennungsablaufs mit einer Verschlechterungen des Kraftstoffverbrauchsverhaltens zu rechnen. Hierbei wird jedoch grundsätzlich eine möglichst niedrige NOx-Partikel-Rohemission des Motors angestrebt, da hierdurch der Aufwand auf der Abgasnachbehandlungsseite geringer ausfällt.

Neben innermotorischen Maßnahmen sowie dem Einsatz von Abgasnachbehandlungssystemen stellen prinzipiell auch in der Zusammensetzung modifizierte Kraftstoffe eine interessante Möglichkeit zur Senkung der Schadstoffemissionen bei Dieselmotoren dar. Hierbei besteht schon seit langem ein besonderes Interesse an der Zumischung von Wasser und anderen Komponenten, wie Alkohole, zu Dieselkraftstoff, da sich auf diese Weise der Stickoxid-Ruß-Trade-off günstig beeinflussen lässt, vgl. Bach, F., Lüft, M., Bartosch, S., Spicher, U.: Einfluss von Diesel-Ethanol-Wasser-Emulsionskraftstoffen auf die Dieselmotor-Emissionen. MTZ 05/2011, S. 408-414.

Bei der Anwendung von Wasser-in-Dieselkraftstoff Emulsion wird anstelle des reinen Dieselkraftstoffs entweder eine fertig zubereitete Wasser-Diesel-Emulsion unter Verwendung eines Emulgierzusatzes oder eine an Bord eines Fahrzeuges erzeugte Emulsion durch das vorhandene Einspritzsystem in den Brennraum eingespritzt. Die Herstellung der Emulsion im Fahrzeug hat den Vorteil, dass der Wasseranteil im Mischkraftstoff unter Berücksichtigung der verbrennungstechnischen Grenzen im Hinblick auf eine möglichst hohe Schadstoffminderung relativ frei gewählt werden kann.

Neben dem Einsatz von Wasser-in-Dieselkraftstoff-Emulsionen besteht grundsätzlich auch die Möglichkeit die vorteilhaften Eigenschaften von Wasser zur Absenkung der Verbrennungstemperaturen durch die Einspritzung von Wasser in die Ansaugluft sowie die direkte Einspritzung des Wassers in den Brennraum. Aufgrund der hohen Verdampfungsenthalpie des Wassers wird bei der Saugrohrzugabe und besonders bei der Direkteinspritzung eine erhebliche Abkühlung der Ansaugluft bzw. der Verbrennungsluft im Zylinder und damit auch der Stickoxidemissionen von bis zu 50 Prozent erreicht. Allerdings fällt die Reduzierung der Rußemissionen wegen der relativ geringen Vermischung des Dieselkraftstoffs mit Wasser im Brennraum und der damit im Vergleich zu Emulsionskraftstoffen geringeren Homogenisierung des Dieselkraftstoffes im Brennraum geringer aus, vgl. DE 10 2009 048 223 A1. Emulsionskraftstoffe bieten daher neben einer einfacheren Anwendung bei Serienmotoren ein höheres Potential zur Minderung der kritischen Schadstoffkomponenten im Abgas von Dieselmotoren.

Wasser-Diesel Emulsionen können als disperse Mehrphasensysteme aus mindestens zwei in einer Mischung unlöslichen Flüssigkeiten angesehen werden, bei denen Wasser als innere, disperse Phase angesehen wird. Der Dieselkraftstoff stellt entsprechend die äußere Phase, das Dispergiermittel dar. Wasser-Diesel Emulsionen sind thermodynamisch nicht stabil und trennen sich nach relativ kurzer Standzeit. Durch den Einsatz von Emulgierhilfsstoffen, sog. Emulgatoren ist es grundsätzlich möglich eine Wasser-Diesel Emulsion in eine thermodynamisch stabile Form zu überführen. Ein für die Eignung einer Emulsion als Kraftstoff für Dieselmotoren wichtiges Kriterium stellt dabei die möglichst feine Verteilung der Wassertropfen im Dieselkraftstoff dar. Für den mobilen Einsatz sind im Fahrzeug unter Verwendung eines Emulgators oder, wenn kein Emulgator eingesetzt wird, einer entsprechenden Mischeinrichtung erzeugte Emulsionen geeignet. Der Einsatz außerhalb eines Fahrzeugs erzeugter Emulsionen, die z.B. an Tankstellen zur Verfügung stehen, weisen eine konstante Zusammensetzung auf, die nicht an die Anforderungen des Motorbetriebs angepasst ist und somit nicht das mögliche Potenzial hinsichtlich Emissions- und Verbrauchsminderung ermöglicht.

Die Wirkung von Wasser-Diesel Emulsionen besteht zum Einen in einer durch die bei der Wasserverdampfung auftretenden Temperaturabsenkung und zum Anderen in verminderten Verbrennungstemperaturen durch den erhöhten Inertgasanteil in Form von Wasserdampf. Beides führt zu einer Verlängerung des physikalischen Zündverzuges, der zu einer gleichmäßigeren (homogeneren) Verteilung des Kraftstoffs im Brennraum und damit zu einem größeren Anteil der "vorgemischten" Verbrennung führt. Die hierdurch verstärkte Homogenisierung des Gemisches in Verbindung mit den in der Emulsion fein verteilten Wassertröpfchen, führt zu einer Verminderung sehr kraftstoffreicher und damit überfetteter Gemischbereiche, die während des Verbrennungsvorganges wesentlich für die Rußentstehung verantwortlich sind. Die Verminderung der Stickoxidemissionen kann auf eine deutliche Flammentemperaturabsenkung sowohl durch die hohe Verdampfungsenthalpie des Wassers als auch durch die wasserbedingte geringere lokale spezifische Wärmefreisetzung in der Verbrennungszone zurückgeführt werden, vgl. Pittermann, R., Hinz, M., Kauert, L.: Einfluss von Abgasrückführung und Kraftstoff-Wasser-Emulsion auf Verbrennungsablauf und Schadstoffbildung im Dieselmotor. MTZ 60(1999)12, S. 812-818. Die zur Absenkung der NOx-Emissionen vermehrt eingesetzte Abgasrückführung (AGR) bewirkt ebenfalls verminderte Flammentemperaturen entsprechend dem erhöhten Inertgasanteil. Allerdings treten bei höheren AGR-Raten stark erhöhte Rußemissionen auf, die in der Kombination mit Wasser-Diesel-Emulsionskraftstoffen vermieden werden können. Somit erhöht der Einsatz von Wasser-Diesel-Emulsionskraftstoffen die AGR-Toleranz und damit das Potenzial zur NOx- und Rußminderung.

Eine weitere Voraussetzung für den optimalen Einsatz eines Emulsionskraftstoffes besteht in der Notwendigkeit einer Anpassung des Wasseranteils in der Emulsion an die unterschiedlichen Motorbetriebszustände, das Abschalten und das Anlassen des Motors auch nach längerem Stillstand.

In der Startphase des Dieselmotors sind ein sicheres und schnelles Anspringen sowie eine schnelle Erwärmung des Motors nur im reinen Dieselkraftstoffbetrieb zu erreichen, da bereits nach einigen Arbeitstakten eine stabile Verbrennung erreicht wird. Bei Verwendung einer Wasser-Diesel-Emulsion auch in der Startphase erhöht sich, durch die verschlechterte Selbstzündungsfähigkeit der Emulsion, die Anzahl der Arbeitstakte ohne Verbrennung mit entsprechend erhöhten Emissionen an unverbranntem Kraftstoff. In der Warmlaufphase kann, entsprechend der Erwärmung des Motors, der Wasseranteil in der Emulsion erhöht werden.

Bei weitgehend stationärem Motorbetrieb und hoher Leistung kann, wegen der höheren Brennraumtemperaturen ein größerer Anteil Wasser in der Emulsion enthalten sein, um so einen möglichst wirkungsgradoptimalen Verbrennungsablauf bei gleichzeitig hoher Absenkung der NOx- und Partikelemissionen zu erreichen. Bei niedrigeren Lastzuständen und entsprechend geringeren Brennraumtemperaturen, ist eine Reduzierung des Wasseranteils in der Emulsion erforderlich, um eine zu starke Abkühlung der Flammenbereiche mit erhöhten Emissionen an unverbranntem Kraftstoff zu vermeiden. Der weitgehend stationäre Motorbetrieb mit nur relativ langsamen Änderungen von Last und Motordrehzahl erfordert keine dynamikfähige Emulgieranlagen.

Grundsätzlich ist die Nutzung des vollen Potenzials einer Wasser-Diesel-Emulsion zur NOx- und Rußminderung nur dann möglich, wenn der Wasseranteil betriebspunktabhängig möglichst nahe an der jeweiligen verbrennungstechnischen Grenze liegt. Für typischerweise im Fahrzeugbereich vorkommenden dynamischen Betrieb bedeutet das, dass eine sehr schnelle Anpassung des Wasseranteils an die momentanen Brennraumtemperaturen und den für die Verbrennung verfügbaren Sauerstoffgehalt bei Anwendung der Abgasrückführung unbedingt erforderlich ist. Je schneller die Anpassung des Wasseranteils an den momentanen Betriebszustand des Motors erfolgt, umso höher fällt die Emissionsminderung aus. Dieses ist umso mehr wichtig, da die Ermittlung des Emissionsverhaltens von Dieselmotoren für Nutzfahrzeuge und mobile Arbeitsmaschinen unter Anwendung transienter Abgastestzyklen erfolgt.

### STAND DER TECHNIK

Aus DE 10 2009 048 223 A1 ist ein Verfahren zur Herstellung einer Mikroemulsion beschrieben, bei dem Dieselkraftstoff und Wasser mittels zweier Common-Rail Einspritzsysteme getrennt und unter hohem Druck einer zwischen den Hochdruckspeichern für Diesel und Wasser sowie der Einspritzdüse angeordneten Mischkammer zugeführt werden. In dieser Mischkammer erfolgt durch den bereits im Dieselkraftstoff enthaltenen Emulgator die Bildung einer Mikroemulsion. Durch diese Anordnung der relativ kleinen Mischkammer in kurzem Abstand vor dem Injektor und die damit möglichen geringen Mischkammer- und Einspritzleitungsvolumina soll eine nur wenige Arbeitszyklen dauernde, schnelle Anpassung des Wasseranteils in der dem Injektor zugeführten Emulsion an den Betriebspunkt des Dieselmotors möglich sein. Dieses Verfahren erfordert den Einsatz spezieller Emulgatoren, die eine sehr schnelle Wasser-Diesel-Emulsionsbildung ermöglichen.

Aus DE 10 2005 044 046 B4 ist eine Vorrichtung bekannt, die mittels eines mechanisch oder hydraulisch angetriebenen Stufenkolbens Wasser und Dieselkraftstoff mit einem Druck von bis zu 200 MPa einer Gegenstrom-Hochdruckemulgierdüse zuführt. Die erzeugte Wasser-Diesel-Emulsion wird in mehreren federbelasteten Zwischenspeichern, die auch eine Dämpferfunktion haben, vorgehalten und nach Bedarf über ein Verteilrohr zu den Injektoren geleitet. Prinzipiell stellt diese Vorrichtung somit eine kombinierte Emulgier- und Hochdruckpumpe, vergleichbar mit der Dieselhochdruckpumpe eines üblichen Common-Rail Einspritzsystems dar. Die relativ großen Kraftstoffspeichervolumina in der Hochdruckpumpe sowie in der Verteilerleitung zu den Injektoren, lassen eine schnelle Anpassung der Emulsionszusammensetzung innerhalb weniger Arbeitstakte nicht zu. Insbesondere der während des Motorstarts und der Warmlaufphase erforderliche reine Dieselbetrieb bzw. Betrieb mit geringen Wasseranteilen erfordert eine entsprechende Vorlagerung des Kraftstoffes z.B. in Verbindung mit einer Spülvorrichtung für die Hochdruckverteilerleitung und der Einspritzleitungen, die in der veröffentlichten Vorrichtung nicht vorgesehen ist.

Ein weiteres Problem dürfte die aufgrund einer relativ langen Verweildauer der Emulsion in den Speichern und Einspritzleitungen, insbesondere bei geringer Motorlast, bestehende Gefahr der Koaleszenz und damit der Phasentrennung der Wasser-Dieselemulsion sein.

Aus DE 44 12 965 A1 ist ein Verfahren und eine Vorrichtung zum Steuern der Dieselkraftstoff- und Wasser-Diesel Emulsionszufuhr bei Reiheneinspritzpumpen bekannt, bei dem abhängig vom Lastzustand des Motors, unterschiedlich zusammengesetzte Emulsionen in einer Mischanlage erzeugt und dann der Einspritzpumpe zugeführt werden oder aber ein ausschließlicher Dieselbetrieb besteht. Um die Reaktionszeit zwischen der Erzeugung einer veränderten Emulsion und der Einspritzung dieser Emulsion zu verkürzen, wird je nach gewünschter Erhöhung oder Reduzierung des Wasseranteils in der Emulsion aus einem Emulsions- oder Dieselspeicher der sogenannte Niederdruck-Pumpenraum entsprechend gespült. Auch wird eine in Abhängigkeit von der Betriebsweise durchgeführte Umschaltung vom Emulsionsbetrieb in den reinen Dieselbetrieb vorgestellt. Insbesondere soll der Motor im Leertauf mit reinem Dieselkraftstoff betrieben werden, während bei höherer Last auf den Emulsionsbetrieb umgeschaltet wird. Die Auswirkung dieser zwischen der Emulsionsbildung und der Bereitstellung am Injektor bestehenden Totzeit auf das Betriebs- und Emissionsverhalten hängt im Wesentlichen von dem Systemvolumen im Bereich der Emulsionserzeugung und dem auszutauschenden Kraftstoffvolumen im Hochdruckbereich des Einspritzsystems ab. In jedem Fall dürfte die Anpassung an dynamische Betriebsbedingungen nur relativ langsam erfolgen.

Keine der oben vorgestellten Verfahren und Vorrichtungen bietet eine Lösung für die Spülung des gesamten Hochdruckbereiches der Einspritzeinrichtungen mit Dieselkraftstoff nach dem Abschalten des Motors um einerseits Zünd- und damit Emissionsprobleme beim Wiederanlassen des Motors zu vermeiden sowie eventueil auftretender Korrosion und/oder auftretendem Verschleiß im Einspritzsystem vorzubeugen.

### AUFGABENSTELLUNG

Die Aufgabe der vorliegenden Erfindung besteht darin, ein Verfahren und eine Vorrichtung anzugeben, um einen Dieselmotor mit einer im Fahrzeug erzeugten Dieselkraftstoff-Wasser-Emulsion, die eine dynamisch veränderbaren, last- und drehzahlabhängigen Wasseranteil aufweist, zu betreiben.

### ERFINDUNGSGEMÄSSE LÖSUNG DER AUFGABE

Die obige Aufgabe wird durch ein Verfahren gemäß Anspruch 1 oder eine Vorrichtung gemäß Anspruch 8 gelöst. Vorteilhafte Weiterbildungen sind Gegenstand der Unteransprüche.

Insbesondere erfolgt erfindungsgemäß die Erzeugung einer Kraftstoff-Wassermischung, besonders bevorzugt eine Wasser-Dieselkraftstoff-Emulsion, durch eine, vorzugsweise im Hochdruckteil eines Einspritzsystems und/oder zwischen einem Kraftstoffspeicher und einer Einspritzdüse bzw. einem Einspritzventil oder Injektor angeordnete, mechanische Emulgiervorrichtung.

Weiter betrifft die Erfindung eine für die Anordnung zur Zumischung von Wasser im Hochdruckteil eines Common-Rail-Kraftstoffeinspritzsystems geeignete Mischeinrichtung mit hydraulisch angetriebenem Hochdruckemulgiersystem, bei dem die getrennt zugeführten Medien Dieselkraftstoff und Wasser zunächst in einem mechanischen Vormischer gemischt werden und anschließend in einem inneren Rezirkulationskreis bzw. Rezirkulationskreislauf zur Erzeugung einer ausreichend homogenen und stabilen Wasser-Dieselemulsion geführt werden.

Die Erzeugung der Emulsion erfolgt - insbesondere durch eine mechanische Emulgiervorrichtung - vorzugsweise ohne Einsatz von Emulgatoren.

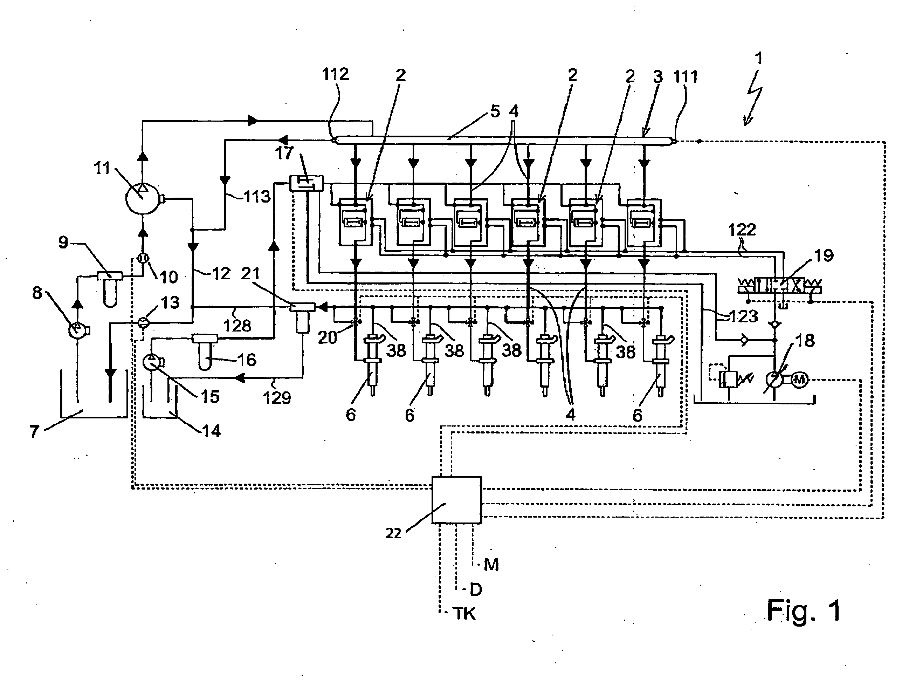

Bei dem erfindungsgemäß ausgeführten Verfahren sind vorzugsweise kompakte, in die Einspritzleitung zwischen dem Dieselkraftstoff-Hochdruckspeicher eines konventionellen Common-Rail-Dieseleinspritzsystems und dem jeweiligen Injektor angeordnete mechanischen Hochdruck-Emulgiersysteme, unter Berücksichtigung der Einbauverhältnisse bei heutigen Common-Rail-Dieselmotoren, möglichst nahe vor den Injektoren angeordnet. Bei Änderung des Motorbetriebspunktes führt aufgrund der so minimierten Einspritzleitungsvolumina eine entsprechende Anpassung des Wasseranteils in der Emulsion bereits wenige Arbeitsspiele später zu einer Einspritzung der entsprechenden Emulsion führt (Fig. 1). Die so bei höheren Motorlasten erreichte sehr kurze Reaktionszeit zwischen der Änderung der Emulsionszusammensetzung und Einspritzung dieser Emulsion ist eine wichtige Voraussetzung für einen auch im dynamischen Motorbetrieb möglichst nahe an der verbrennungstechnischen Grenze dosierten Wasseranteil. Hierdurch wird eine größtmögliche Reduzierung der NOx- und Rußemissionen erreicht.

Außerdem ermöglicht die Erfindung den Austausch der Emulsion durch reinen Dieselkraftstoff bei Abschaltung des Motors, so dass der Startvorgang mit reinem Dieselkraftstoff stattfindet. Hierdurch werden insbesondere die abgastestrelevanten Kaltstart- und Warmlaufemissionen auf dem Niveau des konventionellen Dieselmotors gehalten und Korrosionsvorgänge im Einspritzsystem auch bei längerem Stillstand verhindert.

Insbesondere wird eine kompakte, in ein vorhandenes Common-Rail bzw. Speicher-Dieseleinspritzsystem integrierbare Hochdruck-Emulgiervorrichtung zur Erzeugung einer stabilen Wasser-Diesel-Mikroemulsion unter Berücksichtigung der für den dynamischen Betrieb erforderlichen möglichst geringen Speichervolumina vorgeschlagen.

Die dargestellte Anordnung der zylinderweise zugeordneten Emulgiersysteme ist besonders vorteilhaft zur Verringerung der Volumina der Einspritzleitungen zwischen Emulgiervorrichtung und Injektor. Bei Motoren, die, aufgrund geringerer Baulänge sowie günstigerer Einspritzleitungsführung, kürzere Einspritzleitungsvolumina zwischen Emulgiervorrichtung und Injektor aufweisen, ist es prinzipiell auch möglich, die Anzahl der Emulgiervorrichtungen dadurch zu reduzieren, dass eine Emulgiervorrichtung zwei oder mehrere Injektoren versorgt.

Die Emulgiersysteme werden mit Dieselkraftstoff aus dem Kraftstoffspeicher und mit der für die betriebspunktabhängige Emulsionszusammensetzung erforderlichen Wassermenge, die von einer hydraulisch angetriebenen Hochdruck-Dosierpumpe zur Verfügung gestellt wird, über ein Hochdruckwasserverteilrohr versorgt. Die Wasserdosierung erfolgt auf der Grundlage des durch Messzähler, insbesondere Volumenmesszähler, im Kraftstoffvorlauf und Rücklauf ermittelten Dieselkraftstoffverbrauchs, indem die kennfeldmäßig in einem zusätzlichen Steuergerät hinterlegten Kennfeldwerte der Wasseranteile in der Emulsion unter Berücksichtigung der Kühlwassertemperatur und/oder des durch einen Drucksensor gemessenen Druckes im Kraftstoffspeicher des Motors berechnet und als Steuersignal der Hochdruckdosierpumpe zugeleitet werden.

Auf Grund des mit steigendem Wasseranteil abnehmenden Heizwertes des Emulsionskraftstoffes muss um ein dem Basisdieselbetrieb entsprechendes Leistungsverhaltens zu erreichen, die Kraftstoffeinspritzdauer in den Brennraum des Motors verlängert werden. Hierzu ist idealer Weise eine Anpassung des Einspritzmengenkennfeldes im Einspritzsystemsteuergerät erforderlich. Alternativ können aber auch die Einspritzsignale für die Injektoren durch das Zusatzsteuergerät entsprechend verlängert werden. Allerdings sind einer Verlängerung der Einspritzdauer zur Anpassung an den verminderten Heizwert der Emulsion durch eine Verschleppung des Verbrennungsablaufes in den Expansionstakt und der damit verbundenen Verschlechterung des thermischen Motorwirkungsgrades Grenzen gesetzt. Falls die Verlängerung der Einspritzdauer nicht zur Darstellung der Nennleistung des Motors ausreicht, besteht bei Common-Rail-Einspritzsystemen die Möglichkeit durch eine Erhöhung des Druckes im Dieselspeicher die Einspritzmenge entsprechend anzupassen.

Ein weiteres Merkmal des erfindungsgemäßen Verfahrens besteht darin, in Abhängigkeit des Motorbetriebszustandes eine Emulsions- oder eine Dieselbetriebsweise, insbesondere eine reine Dieselbetriebsweise zu ermöglichen.

Der betriebswarme Motor wird im Allgemeinen mit einer an den Lastzustand angepassten Zusammensetzung Wasser-Diesel-Emulsion betrieben. Hierbei wird bei hohen Motorlasten und entsprechend hohen Verbrennungs- und Motortemperaturen eine möglichst starke Reduzierung der NOx- und Rußemissionen durch einen hohen Wasseranteil in der Emulsion von bis zu 50 Prozent angestrebt. Die Höhe des Wasseranteils wird durch eine Verschlechterung des thermischen Wirkungsgrades durch einen verschleppten Verbrennungsablauf sowie ansteigende Kohlenmonoxid- und Rußemissionen begrenzt. Durch die auf geringe Totzeiten zwischen der Bildung einer kennfeldmäßig vorgegebenen Wasser-Diesel-Emulsion und der Bereitstellung dieser Emulsion im Injektor abgestimmten Kraftstoffleitungsvolumina, wird eine auch für den dynamischen Motorbetrieb ausreichend schnelle Anpassung des Wasseranteils an die momentane Motorlast erreicht.

Mit abnehmender Last und entsprechend niedrigeren Brennraumtemperaturen ist eine Reduzierung des Wasseranteils in der Emulsion zur Einhaltung des thermodynamisch günstigen Verbrennungsablaufs erforderlich. Dieses kann sogar für einen stabilen und emissionsarmen Leerlaufbetrieb einen Übergang zum reinen Dieselkraftstoffbetrieb bedeuten. In diesem Fall wird der Emulgiervorrichtung, beispielsweise durch Abschalten der Dosierpumpe, kein Wasser mehr zugeführt und die in der Einspritzleitung noch vorhandene Emulsion innerhalb von 5 bis 10 Sekunden verbraucht.

In der Startphase des Dieselmotors ist ein schnelles Anspringen sowie in der ersten Phase des Warmlaufs eine schnelle Erwärmung des Motors nur im Dieselkraftstoffbetrieb möglich, da bei Verwendung einer Wasser-Diesel-Emulsion durch die Abkühlung der Zylinderladung eine deutliche Verschlechterung der Zündbedingungen beim Kaltstart, verbunden mit stark erhöhten Emissionen an unverbranntem Kraftstoff, auftritt. Daher ist es erforderlich, die in der Emulgiervorrichtung sowie in den entsprechenden Einspritzleitungsabschnitten enthaltene Kraftstoffemulsion bereits beim Abschalten des Motors durch Dieselkraftstoff zu ersetzen. Dieses kann durch ein zwischen Emulgiervorrichtung und Injektor angeordnetes Spülventil erreicht werden, das bei Betätigen der Motorabschaltung eine Verbindung zur Leckagerückführung öffnet, so dass aus dem Diesel-Hochdruckspeicher durch die Emulgiervorrichtung nachströmender Dieselkraftstoff die Emulsion verdrängt. Die Offnung des Spülventils ist während der letzten Umdrehungen der Kurbelwelle vor dem Stillstand möglich. Die Öffnungsdauer des Spülventils ist so bemessen, dass bei den bestehenden Druckverhältnissen im Dieseldruckspeicher das Emulsionsvolumen vollständig ausgespült wird.

Zur Durchführung des beschriebenen Verfahrens zum Betrieb eines Dieselmotors mit einer Wasser-Diesel-Emulsion ist es erforderlich, eine Vorrichtung zur Herstellung des Emulsionskraftstoffes in das Diesel-Common-Rail bzw. Speicher-Einspritzsystem zu integrieren.

In der erfindungsgemäßen Emulgiervorrichtung wird einer Durchgangsbohrung Dieselkraftstoff, der sich auf dem Druckniveau des Dieselspeichers befindet, sowie der für eine Emulsion erforderliche Wasseranteil aus einer Hochdruck-Dosierpumpe zugeführt und durch ein Mischrohr und/oder einen Turbulenzmischer vorgemischt. Aus dieser Durchgangsbohrung wird dann durch einen hydraulisch angetriebenen Kolben ein Teil der vorhandenen Mischung entnommen und während des nächsten Förderhubes durch eine Emulgierblende oder eine Emulgierdrossel dem Durchgangskanal bzw. dem Hauptkanal wieder zugeführt. Der Kolben wird doppelseitig beaufschlagt. Dadurch erfolgt während des Entnahmehubes gleichzeitig auch eine Verdrängung der Mischung durch die Emulgierdrossel.

Besonders bevorzugt ist es ebenfalls möglich, das Umlaufen der Emulsionsvolumen an die zum Betrieb dessen Motors benötigte Emulsionsmenge durch die Steuerung der Hubfrequenz des Emulgierkolbens anzupassen. Auch dabei wird das Umlaufen der Emulsionsvolumen um den Faktor 2 bis 3 größer gewählt als das im gleichen Zeitintervall vom Motor verbrauchte Emulsionsvolumen.

Der zu emulgierende Kraftstoff wird in einem volumenmäßig möglichst kleinen Rezirkulationskreislauf geführt. Beim Volllastbetrieb wird der Arbeitsraum, insbesondere der zweite Pumpraum, des Emulgierzylinders mit dem 2- bis 3-fachen der maximalen Einspritzmenge gefüllt, was bei einer maximalen Hubfrequenz des Emulgierkolbens von 5 s⁻¹ ausreicht, um den Motor kontinuierlich mit einer in der Durchgangsbohrung bzw. im Hauptkanal vorgelagerten Feinemulsion zu versorgen.

In ganz besonders bevorzugter Ausgestaltung des Rezirkulationssystems ist vorgesehen, dass das vom Emulgierkolben aus der Hauptbohrung entnommenen Mischkraftstoffvolumen um den Faktor 2 bis 3 größer gewählt wird als die vom Injektor eingespritzte Emulsionsmenge, um so die Emulsionszufuhr zum Injektor sicherzustellen bei gleichzeitig geringer Reaktionszeit auf Änderungen der Emulsionszusammensetzungen. Diese Anpassung des Hubvolumens des Emulgierzylinders ist über eine Veränderung des Kolbenhubes möglich. Dementsprechend ist der Stufenkolben auf der Hydraulikseite mit einem Weggebersystem zur Kolbenlageregelung versehen. Eine weitere bevorzugte Ausgestaltung des Rezirkulationssystems sieht vor, dass die pro Zeiteinheit dem Hauptkanal entnommene und wieder zugeführte Emulsionsmenge durch die Hub- bzw. Bewegungsfrequenz des Kolbens bzw. Emulgierkolbens erfolgt. Beispielsweise wird bei geringerer Motorlast eine kleinere Emulsionsmenge dem Hauptkanal pro Zeiteinheit entnommen und wieder zugeführt, in dem die Hub- bzw. Bewegungsfrequenz des Kolbens verringert wird. Dabei wird vorzugsweise das umlaufende, d. h. das pro Zeiteinheit dem Hauptkanal entnommene und wieder zugeführte Emulsionsvolumen um den Faktor 2 bis 3 größer gewählt als die im gleichen Zeitintervall durch eingespritzte Emulsionsmenge. Auf diese Weise wird die Zufuhr einer ausreichend guten Qualität der Emulsion zum Injektor sichergestellt.

Bei der hier eingesetzten Hochdruck-Homogenisierung findet die Bildung einer homogenen Mischung zweier nicht mischbarer Flüssigkeiten bei einem sehr schnellen Druckausgleich, z.B. über einer Drossel durch Scherspannungen und Kavitation, statt. Bei der hier vorliegenden Konfiguration wird durch den Emulgierkolben eine Druckdifferenz von mehr als 100 MPa erzeugt. Die hierbei erzeugte Mikroemulsion weist eine sehr feine Verteilung kleinster Wassertröpfchen mit einer Durchmesserverteilung bis in den nm-Bereich auf. Emulsionen mit einer entsprechend homogenen Verteilung der Wasserphase sind vorteilhaft für den Verbrennungsablauf mit möglichst hohem Anteil an vorgemischten und damit homogenen Gemischbereichen mit entsprechend reduzierten NOx- und Rußemissionen.

Die für die Emulgierung erforderlichen hohen Drücke vor der Emulgierdrossel werden durch einen als Druckübersetzer ausgebildeten Stufenkolben erzeugt, der bezüglich des in der Hauptbohrung herrschenden Dieselraildruckes, d. h. dem Druck des Dieselkraftstoffs im Rail bzw. Speicher, druckausgeglichen ausgelegt ist. Der Antrieb des Kolbens erfolgt dabei durch den Hydraulikkolben auf der Niederdruckseite des Stufenkolbens. Auf Grund des Druckausgleiches auf der Hochdruckseite des Emulgierkolbens, ist die durch den Hydraulikkolben aufzubringende Kraft nur für die Erzeugung des Emulgierdruckes erforderlich.

Die Steuerung der Hubbewegung des Emulgierkolbens erfolgt durch die wechselseitige Beaufschlagung des Hydraulikkolbens mit einem Hydraulikfluid, das von einem Hydraulikaggregat, das vorzugsweise eine Verstellpumpe aufweist, zur Verfügung gestellt wird. Das Hydraulikaggregat wird zur Verbesserung des Gesamtwirkungsgrades direkt vom Motor angetrieben. Die Hubregelung des Emulgierkolbens erfolgt für alle Emulgiersysteme durch eine entsprechende Ansteuerung des Mehrwegeventils für den Kolbenantrieb. Die Ansteuerung des Mehrwegventils erfolgt dabei vorzugsweise durch das Steuergerät.

Um die Reibung der Kolbendichtungen im Emulsionszylinder und damit die gleiche Hubbewegung der Emulgierkolben zu erreichen sowie die hydraulische Antriebsleistung so gering wie möglich zu halten, ist das Zylinderrohr mit einer CLD-Beschichtung versehen, die in Verbindung mit speziellen Gleitringdichtungen sehr geringe Reibungswerte aufweist. Bei der Gleitringdichtung handelt es sich vorzugsweise um eine PTFE Gleitringdichtung. Eine derartige Gestaltung des Emulsionszylinders bringt den Vorteil mit sich, eine gute Abdichtung des Kolbens gegenüber der Zylinderwandung bzw. dem Zylinderrohr bei gleichzeitig geringem Verschleiß der Kolbendichtungen und Führungen zu ermöglichen.

Die Vorteile des erfindungsgemäßen Verfahrens zum Betrieb eines Dieselmotors bestehen darin, dass mit der Integration des mechanischen Emulgiersystems in ein Common-Rail bzw. Speicher-Dieseleinspritzsystem auf einfache und kostengünstige Weise eine Wasser-Diesel-Emulsion mit dynamisch veränderbarem Wasseranteil erzeugt werden kann. Emulgatoren sind hierbei nicht erforderlich, da die in einem Umlauf- bzw. Rezirkulationsverfahren durchgeführte Hochdruckemulgierung unter Einsatz einer Emulgierblende bei Emulgierdrücken von über 100 MPa eine ausreichend stabile Mikroemulsion ergibt. Die Menge des emulgierten Kraftstoffs wird entsprechend dem Emulsionsverbrauch durch die Anpassung des Hubvolumens des Emulgierzylinders und/oder durch die Hubfrequenz des Pumpenkolbens in der Emulgiervorrichtung bestimmt. Dementsprechend ergibt sich eine vorteilhafte Anpassung des Energiebedarfs für den Emulgierprozess an den tatsächlichen Kraftstoffverbrauch.

Ein weiterer Vorteil des vorgeschlagenen Verfahrens besteht in der Möglichkeit in kritischen Motorbetriebszuständen, wie dem niedrigen Leerlauf und der Warmlaufphase nach dem Kaltstart, einen Betrieb mit wasserfreiem Dieselkraftstoff durch einfache Unterbrechung der Wasserdosierung darzustellen. Ergänzend zur Unterbrechung der Wasserdosierung kann vorteilhafterweise die Emulgierkolbenbewegung abgeschaltet werden. Durch die Abschaltung der Emulgierkolbenbewegung werden der erste und der zweite Pumpraum sowie der Abzweigkanal vom Hauptkanal zum ersten Pumpraum und der Verbindungskanal zwischen den beiden Pumpräumen nicht mehr vom Kraftstoff durchströmt. Dies führt zu einer Beschleunigung der Reduzierung des Wasseranteils im Dieselkraftstoff.

Der für den Kaltstartvorgang, ohne gegenüber dem Basisdieselbetrieb erhöhten Emissionen an unverbrannten Kohlenwasserstoffen, notwendige Dieselkraftstoffbetrieb wird durch einen während des vorhergehenden Abschaltvorgangs stattfindenden Austausch noch im Leitungssystem und in der Emulgiervorrichtung vorhandenen Emulsionskraftstoffs mittels einer Spülvorrichtung erreicht. Die ausgespülte Emulsion wird über das Leckagesystem mit anschließender Wasser-Diesel-Trennung in einem Wasserabscheider in den Diesel- bzw. den Wassertank zurückgeführt. Ein zusätzlicher Emulsionszwischenspeicher ist somit nicht erforderlich.

Das erfindungsgemäße Verfahren und die erfindungsgemäße Emulgiervorrichtung können neben Common-Rail bzw. Speichereinspritzsysteme auch bei konventionellen Pumpe-Leitung-Düsen-Systemen zum Einsatz kommen. Unter Pumpe-Leitung-Düsen-Systemen werden im Folgenden auch jene Pumpe-Düsen-Systeme verstanden, bei denen Pumpe und Düse in einem gemeinsamen Gehäuse untergebracht sind.

Bei derartigen Pumpe-Leitung-Düsen-Systemen (im Folgenden auch PLD-System) ist es vorteilhaft, das Emulgiersystem in den Niederdruckversorgungskreislauf der Einspritzpumpe zu integrieren.

Die Möglichkeit der schnellen Änderung der Wasserkonzentration in der Wasser-Diesel-Emulsion bleibt, zumindest weitgehend, erhalten. Der für den Abschalt- und Startvorgang vorteilhafte reine Dieselbetrieb kann durch Spülvorgänge im Nieder druckbereich des Systems realisiert werden.

Dabei lassen sich Dieselmotoren, die mit einer erfindungsgemäßen Emulgiervorrichtung ausgestattet sind, und/oder erfindungsgemäße Emulgiervorrichtungen auch mit anderen Emulsionskraftstoffen betreiben. Dabei kann Dieselkraftstoff, Biodiesel und/oder synthetischer Dieselkraftstoff in dem Emulsionskraftstoff enthalten sein. Als weiterer Bestandteil des Emulsionskraftstoffs kann dann eine weitere mit der bzw. den vorgenannten Komponente(n) nicht mischbare Komponente im Emulsionskraftstoff enthalten sein. Bei der weiteren Komponente kann es sich vorzugsweise um Wasser oder Wasser-Alkohol-Mischungen handeln.

Vorzugsweise wird der Wasseranteil in der Wasser-Dieselemulsion von einem Steuergerät geregelt. Dabei handelt es sich vorzugsweise um ein zusätzliches Steuergerät für die Steuerung der Emulgiervorrichtung. Dabei erfolgt die Regelung vorzugsweise abhängig von der Motorlast, der Drehzahl und/oder der Kühlwassertemperatur. Weiterhin kann, ergänzend oder alternativ zur Regelung des Wasseranteils in der Wasser-Dieselemulsion, das Ersetzen der Wasser-DieselkraftstoffEmulsion durch Dieselkraftstoff, beispielsweise als Spolvorgang beim Abschalten des Motors, von dem Steuergerät geregelt werden.

### AUSFÜHRUNGSBEISPIEL

Die Erfindung wird im Folgenden anhand der Zeichnung beispielhaft erläutert. In der Zeichnung zeigen:
- Fig. 1: ein Systemschema für einen 6-Zylinder Motor mit jeweils den einzelnen Zylindern zugeordneten Emulgiervorrichtungen,
- Fig.2: ein Systemschema für einen 6-Zylinder Motor mit jeweils zwei Zylindern zugeordnete Emulgiervorrichtungen,
- Fig. 3: eine Prinzipdarstellung einer erfindungsgemäßen Emulgiervorrichtung,
- Fig. 4: eine Prinzipdarstellung einer anderen erfindungsgemäßen Emulgiervorrichtung für Einspritzsysteme nach dem Pumpe-Leitung-Düse-Prinzip, und
- Fig. 5: ein Systemschema für ein Einspritzsystem nach dem Pumpe-Leitung-Düse-Prinzip.

In den Figuren werden für gleiche oder gleichartige Komponenten und Bauteile die gleichen Bezugszeichen verwendet, wobei sich entsprechende Eigenschaften und Vorteile ergeben, auch wenn eine wiederholte Beschreibung aus Vereinfachungsgründen weggelassen wird.

Fig. 1 zeigt in einer schematischen Darstellung einen vorschlagsgemäßen Dieselmotor 1 mit insbesondere mehreren vorschlagsgemäßen Emulgiervorrichtungen 2, die hier vorzugsweise in ein Einspritzsystem 3 des Dieselmotors 1 integriert oder diesem zugeordnet sind.

Insbesondere sind die Emulgiervorrichtungen 2 insbesondere in Hochdruck- oder Einspritzleitungen 4 zwischen einer Dieselrail bzw. Sammelschiene 5 und Einspritzdüsen, Einspritzventilen bzw. Injektoren 6 angeordnet bzw. integriert. Der vorschlagsgemäße Dieselmotor 1 kann mit einer Wasserdieselemulsion mit variabler Zusammensetzung bis hin zu einem Dieselkraftstoff betrieben werden.

Der Motor 1 bzw. das Einspritzsystem 3 weist vorzugsweise einen Dieseltank 7, eine Dieselvordruckpumpe 8, einen Dieselfilter 9, einen Kraftstoffzähler 10, insbesondere einen Kraftstoffvolumenzähler, und/oder eine Dieselhochdruckpumpe 11 in der Zuleitung zu der Sammelschiene 5 auf. Dabei kann die Dieselhochdruckpumpe 11 und/oder die Sammelschiene 5 vorzugsweise eine Hochdruckregelung 112 und/oder einen Kraftstoffrücklauf 113 zum Dieseltank 7 aufweisen. Vorteilhafterweise ist in der Dieselrail ein Drucksensor 111 integriert, der Messsignale das aktuell im Speicher herrschenden Dieselkraftstoffdrucks an das Steuergerät 22 liefert.

Eine Leckage- bzw. Rückleitung 12 führt von der Sammelschiene 5 und/oder von der Dieselhochdruckpumpe 11 über einen Kraftstoffzähler 13 in den Dieseltank 7 zurück.

Die Emulgiervorrichtungen 2 sind jeweils vorzugsweise mit Kraftstoff, insbesondere Dieselkraftstoff, und einer zuzumischenden Komponente, hier Wasser, versorgbar.

Beim Darstellungsbeispiel weist der Motor 1 bzw. das Einspritzsystem 3 vorzugsweise einen Wassertank 14, eine Wasservordruckpumpe 15, einen Wasserfilter 16 und/oder eine Dosiereinheit 17, insbesondere Dosierpumpe und/oder Hochdruckpumpe, zur Versorgung bzw. Zuleitung von Wasser zu den Dosiervorrichtungen 2 auf.

Der Motor 1 bzw. das Einspritzsystem 3 bzw. die jeweilige Emulgiervorrichtung 2 und/oder die Dosiereinheit 17 weist vorzugsweise einen hydraulischen Antrieb, insbesondere mit einer Verstellpumpe 18 und/oder einem Ventil 19, insbesondere zur Beaufschlagung oder Versorgung mit Wasser oder einer sonstigen Hydraulikflüssigkeit bei variablem bzw. einstellbarem Druck.

Besonders bevorzugt werden die Emulgiervorrichtungen parallel mit Wasser versorgt bzw. sind parallel an die Dosiereinheit 17 angeschlossen.

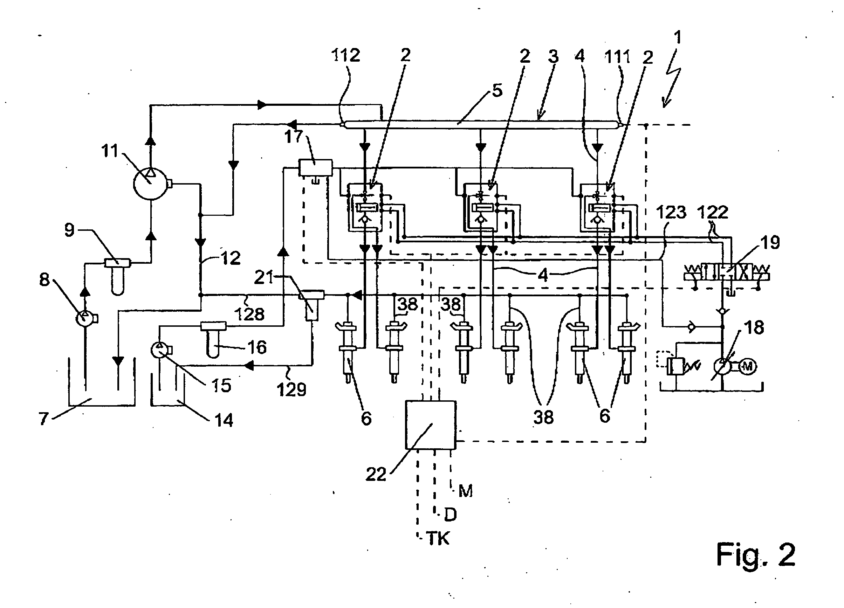

Beim Darstellungsbeispiel ist vorzugsweise jedem Zylinder bzw. jedem Injektor 6 vorzugsweise eine separate oder eigene Emulgiervorrichtung 2 zugeordnet. Jedoch können auch mehrere Einspritzventile bzw. Injektoren 6 an eine Emulgiervorrichtung 2 gemeinsam angeschlossen sein, wie später anhand einer anderen Ausführungsvariante gemäß Fig. 2 näher erläutert.

Der Motor 1 bzw. Einspritzsystem 3 weist vorzugsweise Spülventile 20 auf, die jeweils den Emulgiervorrichtungen 2 zugeordnet und insbesondere in den Einspritzleitungen 4 jeweils zwischen der zugeordneten Emulgiervorrichtung 2 und dem jeweiligen Injektor 6 angeordnet sind.

Die Spülventile 20 und/oder die Leckageleitungen 38 der Injektoren 6 sind vorzugsweise an einen Wasserabscheider 21 angeschlossen. Bei geöffneten Spülventilen 20 können die Emulgiervorrichtungen 2 und Einspritzleitungen 4 mit Dieselkraftstoff gespült werden, wobei Restmengen von Dieselkraftstoff und Wasser über den Wasserabscheider 21 abgeleitet und einerseits in Dieselkraftstoff und andererseits in Wasser aufgetrennt werden. Der abgeschiedene Dieselkraftstoff wird über die Rückleitung 12 in den Dieseltank 7 zurückgeleitet. Das abgeschiedene Wasser wird über eine entsprechende Rückleitung in den Wassertank 14 zurückgeführt.

Der Motor 1 weist weiter vorzugsweise ein Steuergerät 22, vorzugsweise für den Emulsionsbetrieb, auf, das insbesondere in Abhängigkeit von Betriebsparametern und/oder vom Motorbetriebspunkt, besonders bevorzugt in Abhängigkeit von Motorlast M, Drehzahl D und/oder Kühlwassertemperatur K, den Wasseranteil steuert oder regelt, der mittels der Emulgiervorrichtungen 2 dem Dieselkraftstoff zugemischt wird.

Insbesondere wird der Wasseranteil der von der Emulgiervorrichtung 2 jeweils bereitgestellten Wasser-Dieselkraftstoff-Emulsion also abhängig vom Motorbetriebspunkt verändert bzw. variiert oder angepasst.

In Fig. 1 sind die entsprechenden, bevorzugten und/oder optionalen Signalverbindungen, Steuerleitungen und dergleichen des Steuergeräts 22 mit den entsprechenden Komponenten gestrichelt dargestellt.

Die Emulgiervorrichtungen 2 arbeiten vorzugsweise mechanisch.

Fig. 2 zeigt in einer ähnlichen Darstellung den Dieselmotor 1 gemäß einer anderen Ausführungsvariante, wobei die Injektoren 6 paarweise an eine gemeinsame Emulgiervorrichtung 2 angeschlossen sind. Ansonsten gelten die Ausführungen und Erläuterungen zu der Ausführungsform gemäß Fig. 1 entsprechend oder ergänzend.

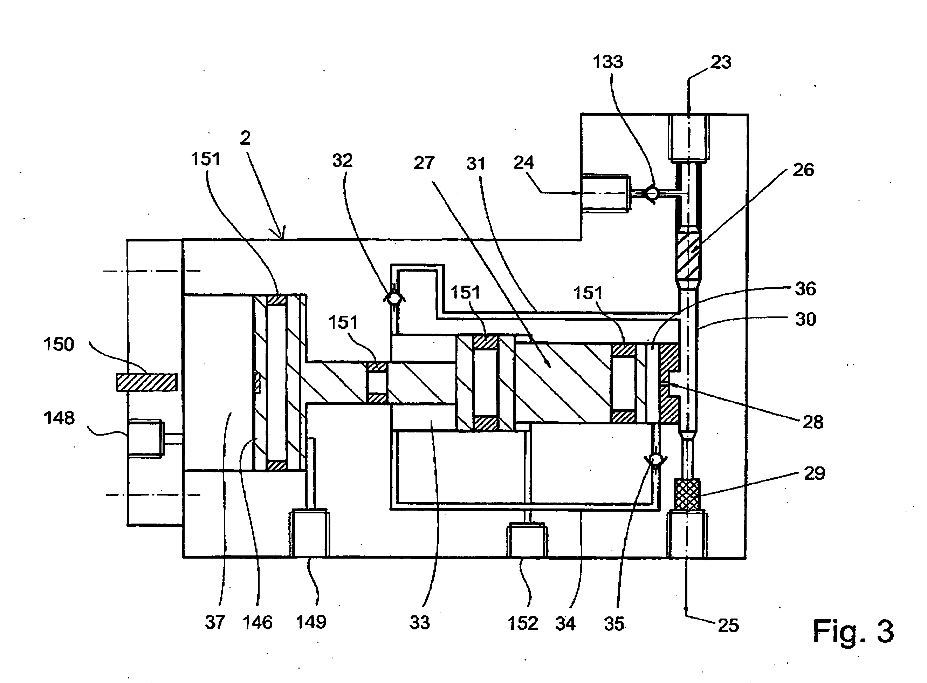

Fig. 3 zeigt in einer schematischen Schnittdarstellung einen bevorzugten Aufbau der vorschlagsgemäßen Emulgiervorrichtung 2.

Die Emulgiervorrichtung 2 weist vorzugsweise einen Einlass 23 für Dieselkraftstoff und einen Einlass 24 für Wasser sowie einen Auslass 25 für die Wasser-Dieselkraftstoff-Emulsion auf.

Die Emulgiervorrichtung 2 weist vorzugsweise einen mechanischen Voremulgierer 26 auf. Dieser ist jedoch nur optional vorgesehen. Bei dem Voremulgierer handelt es sich vorzugsweise um einen Turbulenzmischer.

Die Emulgiervorrichtung 2 weist vorzugsweise eine Mischeinrichtung, insbesondere einen, insbesondere hydraulisch angetriebenen bzw. bewegbaren, Kolben 27 und/oder eine Emulgierdrossel 28 zum mechanischen Emulgieren auf.

Die Emulgiervorrichtung 2 weist optional einen Dämpfer 29 vor dem Auslass 25 auf. Durch den Dämpfer 29 werden Druckschwingungen vor dem Injektor, die durch den Kolben 27 hervorgerufen werden können, reduziert.

Die Emulgiervorrichtung 2 weist einen Hauptkanal 30 auf, durch den der Dieselkraftstoff und das Wasser, zugeführt über die Einlässe 23 und 24, zu dem Auslass 25 über den optionalen Voremulgierer 26 und den optionalen Dämpfer 29 strömt.

Der Kolben 27 und die zugeordnete Emulgierdrossel 28 bilden eine mechanische Mischvorrichtung zur Vermischung von Wasser und Dieselkraftstoff. Diese Mischvorrichtung ist insbesondere an den Kanal 30 angeschlossen, besonders bevorzugt zwischen dem Voremulgierer 26 und dem Dämpfer 29.

Die Mischeinrichtung arbeitet vorzugsweise mechanisch und ist insbesondere hydraulisch angetrieben.

Insbesondere bildet der Kolben 27 eine Kolbenpumpe, die das Wasser und den Dieselkraftstoff zum Mischen durch die Emulgierdrossel 28 - insbesondere eine Öffnung mit kleinem Querschnitt, von vorzugsweise etwa 0,2 mm - strömen lässt bzw. pumpt. Vorzugsweise weist die Emulgierdrossel 28 eine Drosselbohrung mit einem Durchmesser von 0,15 mm bis 0,25 mm auf. Vorzugsweise beträgt der Differenzdruck an der Drossel mindestens 100 MPa.

Vorzugsweise weist die Emulgiervorrichtung 2 bzw. Mischeinrichtung einen Abzweigkanal 31, ein im Abzweigkanal 31 angeordnetes Rückschlagventil 32, einen ersten Pumpraum 33, einen Verbindungskanal 34, ein im Verbindungskanal 34 angeordnetes Rückschlagventil 35 und/oder einen zweiten Pumpraum 36 auf.

Der Abzweigkanal 31 zweigt vom Hauptkanal 30 ab und verbindet den Hauptkanal 30 mit dem ersten Pumpraum 33.

Der Verbindungskanal 34 verbindet den ersten Pumpraum 33 mit dem zweiten Pumpraum 36.

Der, vorzugsweise als Stufenkolben ausgebildete, Kolben 27 ist derart ausgebildet, dass er durch einen entsprechenden Antrieb, hier vorzugsweise hydraulischen Antrieb, insbesondere durch entsprechende Beaufschlagung in einem Arbeitszylinder 37, hin und her bewegbar ist, so dass der Kolben 27 die beiden Arbeitsräume 33 und 36 abwechselnd vergrößert und verkleinert, um den Dieselkraftstoff und das Wasser über den Abzweigkanal 31 aus dem Hauptkanal 30 abzuzweigen und letztendlich durch die Emulgierdrossel 28 wieder in den Hauptkanal 30 zurückzupumpen. Hierdurch wird ein Umlaufsystem gebildet, bei dem das durch den Abzweigkanal 31 pro Zeiteinheit entnommene Mischungsvolumen genau dem in der gleichen Zeiteinheit über die Emulgierdrossel 28 dem Hauptkanal 30 wieder zugeführten Emulsionsvolumen entspricht.

Der Arbeitszylinder 37 wird vorzugsweise von der Verstellpumpe 18 entsprechend mit unter Druck stehender Hydraulikflüssigkeit, wie Hydrauliköl oder Wasser, beaufschlagt, um den gewünschten Antrieb des Kolbens 27 zu realisieren. Jedoch sind auch andere konstruktive Lösungen möglich.

Der Wasseranteil der von der Emulgiervorrichtung 2 abgebenden Wasser-Dieselkraftstoff-Emulsion hängt insbesondere von der Wassermenge ab, die über den Einlass 24 zugegeben wird. Dieser Wasseranteil wird von der Dosierpumpe bzw. Dosiereinheit 17 bestimmt. Diese ist vorzugsweise ebenfalls hydraulisch angetrieben und/oder wird vorzugsweise von dem Steuergerät 22 gesteuert.

Die Frequenz der Bewegungen des Kolbens 27 wird vorzugsweise mit dem Steuergerät 22 überwacht. Vorzugsweise ist weiterhin ein Kolbenwegmesssystem 150 vorgesehen. Durch die Messung der Frequenz der Bewegung des Kolbens 27 und/oder des Kolbenwegs ist es möglich, dass über die Emulgierdrossel 28 in den Hauptkanal 30 eingebrachte Emulsionsvolumen zu überwachen und/oder zu steuern.

Vorteilhafterweise kann durch die Steuerung bzw. Überwachung der Frequenz des Kolbens 27 und/oder des Kolbenwegs des Kolbens 27 sichergestellt werden, dass bei einem Spülvorgang des Hauptkanals 30 und/oder der zum Injektor führenden Einspritzleitung 4 keine Emulsion aus den Pumpräumen 33 und 36 und aus den Kanälen 31 und 34 in den Hauptkanal 30 und dadurch zum Injektor 6 gelangen kann. Diese vorteilhafte Überwachung und Steuerung des Kolbens 27 bei Spülvorgängen des Hauptkanals 30 ist insbesondere beim Abschalten des Motors und/oder beim Startvorgang des Motors vorteilhaft.

Vorteilhafterweise sind die Zylinderlaufflächen des Emulgierkolbens 27 mit einer CLD-Beschichtung versehen. Alternativ oder ergänzend ist es vorteilhaft, wenn der Kolben 27 PTFE-Gleitringdichtungen 151 aufweist. Dadurch werden geringe Reibungswerte bei gleichzeitig hoher Dichtigkeit ermöglicht. Vorteilhafterweise ist ein Rückführkanal 152 vorgesehen, über den Emulsionsleckagemengen, also Emulsionsmengen, welche die Gleitringdichtungen 151 durchdrungen haben, aus der Emulgiervorrichtung 2 abgeführt werden können. Vorteilhafterweise werden diese Emulsionsleckagemengen dem Wasserabscheider 21 zugeführt. Dabei ist es insbesondere vorteilhaft, die Emulsionsleckagemengen dem Wasserabscheider 21 über eine Leckageleitung zuzuführen.

Nachfolgend wird anhand der weiteren Figuren eine weitere Ausführungsform des vorschlagsgemäßen Verfahrens bzw. der vorschlagsgemäßen Emulgiervorrichtung und des vorschlagsgemäßen Dieselmotors näher erläutert, wobei die bisherigen Ausführungen und Erläuterungen insbesondere entsprechend oder ergänzend gelten, auch wenn dies nicht explizit wiederholt wird. Des Weiteren können einzelne Merkmale und Aspekte der verschiedenen Ausführungsformen auch beliebig und miteinander kombiniert, aber auch unabhängig voneinander realisiert werden.

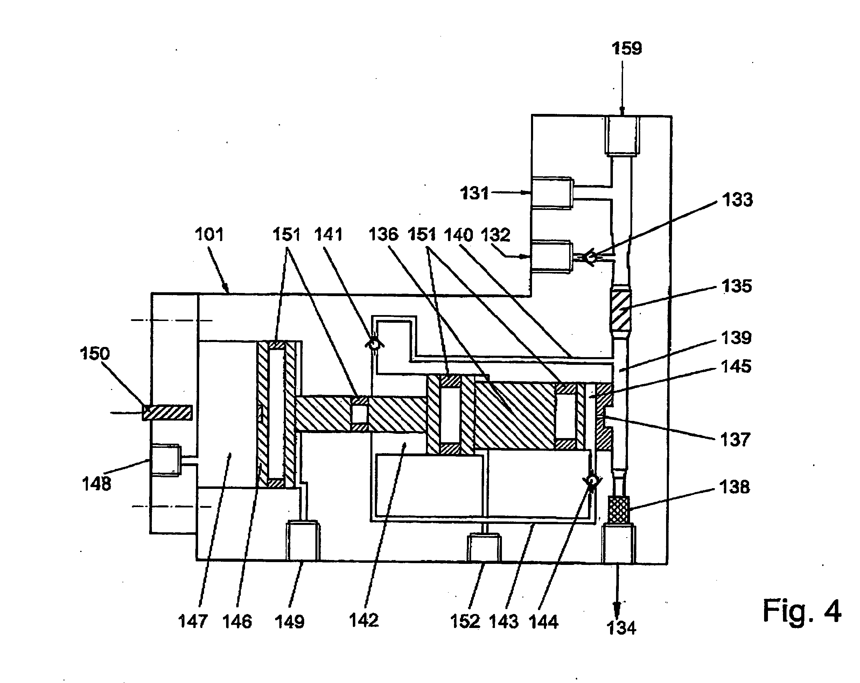

In Fig. 4 ist eine weitere erfindungsgemäße Emulgiervorrichtung 101 dargestellt. Diese weist einen Kolben 136 auf. Die Frequenz der Bewegungen des Kolbens 136 wird vorzugsweise mit dem Steuergerät 130 überwacht. Vorzugsweise ist weiterhin ein Kolbenwegmesssystem 150 vorgesehen. Durch die Messung der Frequenz der Bewegung des Kolbens 136 und/oder des Kolbenwegs ist es möglich, dass über die Emulgierdrossel 137 in den Hauptkanal 139 eingebrachte Emulsionsvolumen zu überwachen und/oder zu steuern.

Vorteilhafterweise kann durch die Steuerung bzw. Überwachung der Frequenz des Kolbens 136 und/oder des Kolbenwegs des Kolbens 136 sichergestellt werden, dass bei einem Spülvorgang des Hauptkanals 139 und/oder der zum Injektor führenden Einspritzleitung 127 keine Emulsion aus den Pumpräumen 142 und 145 und aus den Kanälen 140 und 143 in den Hauptkanal 139 und dadurch zum Injektor 104 gelangen kann. Diese vorteilhafte Überwachung und Steuerung des Kolbens 136 bei Spülvorgängen des Hauptkanals 139 ist insbesondere beim Abschalten des Motors und/oder beim Startvorgang des Motors vorteilhaft.

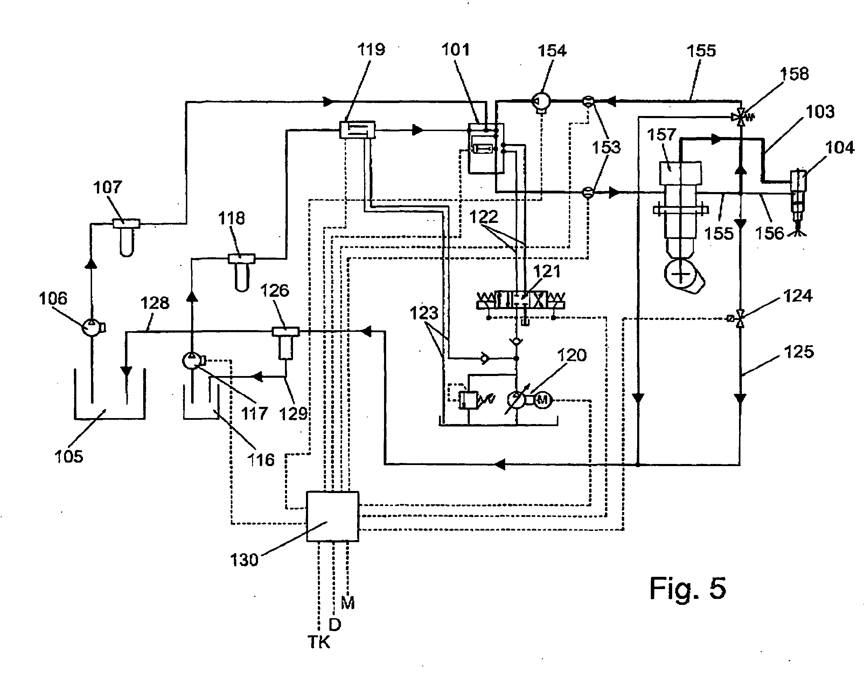

Vorteilhafterweise sind die Zylinderlaüfflächen des Emulgierkolbens 136 mit einer CLD-Beschichtung versehen. Alternativ oder ergänzend ist es vorteilhaft, wenn der Kolben 136 PTFE-Gleitringdichtungen 151 aufweist. Dadurch werden geringe Reibungswerte bei gleichzeitig hoher Dichtigkeit ermöglicht. Vorteilhafterweise ist ein Rückführkanal 152 vorgesehen, über den Emulsionsleckagemengen, also Emulsionsmengen, welche die Gleitringdichtungen 151 durchdrungen haben, aus der Emulgiervorrichtung 101 abgeführt werden können. Vorteilhafterweise werden diese Emulsionsleckagemengen dem Wasserabscheider 126 zugeführt. Dabei ist es insbesondere vorteilhaft, die Emulsionsleckagemengen dem Wasserabscheider 126 über eine Leckageleitung 125 zuzuführen (für die Verschaltung von Leckageleitung 125 und Wasserabscheider 126 siehe Fig. 5).

Die in Fig. 4 gezeigte Emulgiervorrichtung 101 eignet sich insbesondere für den Einsatz in Dieseleinspritzsystemen mit nockengetriebenen Pumpenelementen. Schematisch ist dies für die Pumpe 157 in Fig. 5 dargestellt. Die Pumpe 157 versorgt den Injektor bzw. die Einspritzdüse 104. Die Pumpe 147 wird dabei über die Umlaufleitung 155 mit Kraftstoff bzw. Emulsionskraftstoff versorgt. Dabei weist die Umlaufleitung 155 einen Versorgungsdruckregler 158 auf. In der Umlaufleitung 155 wird der Kraftstoff bzw. der Emulsionskraftstoff durch die Umlaufpumpe 154 gefördert.

Weiterhin weist die Umlaufleitung 155 Sensoren 153 zur Überwachung des Wassergehalts des Emulsionskraftstoffs auf. Die Sensoren 153 dienen auch zur Steuerung des Spülventils 124. Durch Öffnen des Spülventils 124 können die Emulgiervorrichtung 101 und/oder die Umlaufleitung 155 mit Dieselkraftstoff gespült werden. Dies geschieht insbesondere beim Abschalten und/oder Anlassen des Dieselmotors. Der bei einem derartigen Spülvorgang anfallende Emulsionskraftstoff und/oder die im Versorgungsdruckreglers 158 anfallende Absteuermenge des Kraftstoffs und/oder die Leckagemenge des Injektors 104 können über die Leckageleitung 125 dem Wasserabscheider 126 zugeführt werden. Der Wasserabscheider 126 dient der Trennung von Dieselkraftstoff und Wasser. Das vom Dieselkraftstoff abgetrennte Wasser wird durch die Wasserrückleitung 129 für Wasser dem Wassertank 116 zugeführt. Der vom Wasser abgetrennte Dieselkraftstoff wird über die Dieselrückleitung 128 für Diesel dem Dieseltank 105 zugeführt.

Um in die Umlaufleitung 155 integriert werden zu können, weist die in Fig. 4 schematisch dargestellte Emulgiervorrichtung einen zusätzlichen Eingang 159 auf. Dieser zusätzliche Eingang 159 wird mit der Umlaufleitung 155 verbunden. Der Auslass 134 der Emulgiervorrichtung 101 wird ebenfalls mit der Umlaufleitung 155 verbunden. Dadurch wird der Hauptkanal 139 der Emulgiervorrichtung 101 Teil des durch die Umlaufleitung 155 gebildeten Kreislaufs. Die Emulgiervorrichtung 101 weist weiterhin einen Einlass 131 für den Einlass von Dieselkraftstoff und einen Einlass 132 für den Einlass von Wasser auf. Dabei können die durch die Einlässe 131 und/oder 132 zugeführten Mengen bzw. Mengenströme vorzugsweise durch das Steuergerät 130, insbesondere kennfeldmäßig, geregelt werden. Vorzugsweise weist der Einlass 132 zum Einlass von Wasser ein Rückschlagventil 133 auf, das ein Rückströmen von Wasser verhindert.

Es werden ein Verfahren und eine Emulgiervorrichtung zum Betrieb eines Dieselmotors mit einer Wasser-Dieselkraftstoff-Emulsion vorgeschlagen, wobei der Wasseranteil in Abhängigkeit vom Motorbetriebspunkt verändert wird und/oder die Emulgiervorrichtung und/oder Teile der Einspritzleitung beim Abschalten des Motors mit reinem Dieselkraftstoff gespült werden.

**Bezugszeichenliste:**

| | | | |
|---|---|---|---|
| 1 | Dieselmotor | 36 | zweiter Pumpraum |
| 2 | Emulgiervorrichtung | 37 | Arbeitsraum bzw. -zylinder |
| 3 | Einspritzsystem | 38 | Leckageleitung |
| 4 | Einspritzleitung | 101 | Emulgiervorrichtung |
| 5 | Sammelschiene bzw. Rail | 103 | Einspritzleitung |
| 6 | Injektor | 104 | Injektor |
| 7 | Dieseltank | 105 | Dieseltank |
| 8 | Dieselvordruckpumpe | 106 | Dieselvordruckpumpe |
| 9 | Dieselfilter | 107 | Dieselfilter |
| 10 | Kraftstoffzähler (Zuleitung) | 108 | Dieselvolumenzähler (Zuleitung) |
| 11 | Dieselhochdruckpumpe | 111 | Drucksensor |
| 12 | Rückleitung | 112 | Hochdruckregelung |
| 13 | Kraftstoffzähler (Rückleitung) | 113 | Kraftstoffrücklauf |
| 14 | Wassertank | 116 | Wassertank |
| 15 | Wasservordruckpumpe | 117 | Wasservordruckpumpe |
| 16 | Wasserfilter | 118 | Wasserfilter |
| 17 | Dosiereinheit (Wasser) | 119 | Dosiereinheit (Wasser) |
| 18 | Verstellpumpe | 120 | Verstellpumpe |
| 19 | Ventil | 121 | Ventil |
| 20 | Spülventil | 122 | Hydraulik (Emulgiereinheiten) |
| 21 | Wasserabscheider | 123 | Hydraulik (Dosiereinheit) |
| 22 | Steuergerät | 124 | Spülventil |
| 23 | Einlass (Dieselkraftstoff) | 125 | Leckageleitung |
| 24 | Einlass (Wasser) | 126 | Wasserabscheider |
| 25 | Auslass | 128 | Dieselrückleitung |
| 26 | Voremulgierer | 129 | Wasserrückleitung |
| 27 | Kolben | 130 | Steuergerät |
| 28 | Emulgierdrossel | 131 | Einlass (Dieselkraftstoff) |
| 29 | Dämpfer | 132 | Einlass (Wasser) |
| 30 | Hauptkanal | 133 | Rückschlagventil (Wasserzufuhr) |
| 31 | Abzweigkanal | 134 | Auslass |
| 32 | Rückschlagventil | 135 | Voremulgierer |
| 33 | erster Pumpraum | 136 | Kolben |
| 34 | Verbindungskanal | 137 | Emulgierdrossel |
| 35 | Rückschlagventil | 138 | Dämpfer |
| 139 | Hauptkanal | 152 | Rückführkanal |
| 140 | Abzweigkanal | 153 | Sensoren |
| 141 | Rückschlagventil | 154 | Pumpe (Umlaufleitung) |
| 142 | erster Pumpraum | 155 | Umlaufleitung |
| 143 | Verbindungskanal | 156 | Leckageleitung |
| 144 | Rückschlagventil | 157 | Pumpe |
| 145 | zweiter Pumpraum | 158 | Versorgungsdruckregler |
| 146 | Hydraulikkolben | 159 | Eingang |
| 147 | Arbeitsraum | | |
| 148 | Anschlusskanal (Hydraulik) | D | Drehzahl |
| 149 | Anschlusskanal (Hydraulik) | TK | Kühlwassertemperatur |
| 150 | Kolbenwegsensor | M | Motorlast |
| 151 | Gleitringdichtungen | | |

## Patentansprüche

1. Verfahren zum Betrieb eines Dieselmotors (1) mit einer Wasser-Dieselkraftstoff-Emulsion, wobei dass der Wasseranteil der Wasser-Dieselkraftstoff-Emulsion abhängig vom Motorbetriebspunkt verändert oder angepasst wird,
**dadurch gekennzeichnet,**
**dass** Dieselkraftstoff und Wasser in einem durch den Betriebspunkt vorgegebenen Mengenverhältnis einem Hauptkanal (30, 139) zugeführt und strömungsmechanisch vorgemischt werden, wobei die Wasser-Diesel-Mischung aus diesem Hauptkanal (30, 139) in einen ersten Pumpraum (33, 142) gesaugt wird und gleichzeitig durch eine Emulgierblende oder -drossel (28, 137) aus einem zweiten Pumpraum (30, 139) in den Hauptkanal (36, 145) zurückgefördert wird.

2. Verfahren nach Anspruch 1, **dadurch gekennzeichnet, dass** Diesel und Wasser möglichst nahe an einem Injektor (6, 104) oder Einspritzventil bzw. einer Einspritzdüse, vorzugsweise im Hochdruckteil des Einspritzsystems (3), gemischt werden, insbesondere zur Verbesserung oder Minimierung von Reaktionszeiten zwischen der Änderung des Wasseranteils in der Emulsion und deren Bereitstellung am Injektor (6, 104) bzw. an der Einspritzdüse.

3. Verfahren nach Anspruch 1 oder 2, **dadurch gekennzeichnet, dass** bei Abschalten des Dieselmotors (1) während der Auslaufphase in einer Emulgiervorrichtung (2, 101) und/oder einer Einspritzleitung, insbesondere der Einspritzleitung (4, 103) zwischen der Emulgiervorrichtung (2, 101) und einem Injektor (6, 104), zu einem Injektor (6, 104) oder Einspritzventil bzw. einer Einspritzdüse vorhandene Wasser-Dieselkraftstoff-Emulsion durch nachströmenden Dieselkraftstoff, insbesondere aufgrund des Öffnens eines Spülventils (20, 124), ersetzt wird.

4. Verfahren nach einem der voranstehenden Ansprüche, **dadurch gekennzeichnet, dass** Kraftstoffleckagen, die durch Undichtigkeiten an Injektoren (6, 104) oder Einspritzventilen bzw. Einspritzdüsen auftreten und/oder Emulsionskraftstoff, der bei der Spülung der Emulgiervorrichtung (2, 101) und der entsprechenden Einspritzleitungen (4, 103) abgeführt werden muss, in eine Leckageleitung (38, 125, 156) geführt werden, insbesondere wobei die Leckage mittels Wasserabscheider (21, 126) in wasserfreien Dieselkraftstoff und Wasser getrennt wird und vorzugsweise in die entsprechenden Vorratstanks (7, 14) zurückgeführt wird.

5. Verfahren nach einem der voranstehenden Ansprüche, **dadurch gekennzeichnet, dass** bei größeren und/oder mehrzylindrigen Dieselmotoren (1) die Wasser-Dieselkraftstoff-Emulsion mittels einer Emulgiervorrichtung (2, 101) vor jedem Injektor (6, 104) oder Einspritzventil bzw. jeder Einspritzdüse erzeugt wird, insbesondere wobei das Totvolumen, insbesondere das Kraftstoffleitungsvolumen, zwischen Emulgiervorrichtung (2, 101) und Injektor (6, 104) oder Einspritzventil bzw. Einspritzdüse weniger als die Hälfte der maximalen Einspritzmenge pro Arbeitstakt beträgt.

6. Verfahren nach einem der voranstehenden Ansprüche, **dadurch gekennzeichnet, dass** der Wasseranteil in der Wasser-Diesel-Emulsion, vorzugsweise abhängig von der Zusammensetzung der in einer Umlaufleitung (155) befindlichen Wasser-Diesel-Kraftstoff-Emulsion, der Mötorlast (M), Drehzahl (D) und/oder der Kühlwassertemperatur (TK) und/oder das Ersetzen der Wasser-Diesel-Emulsion durch Dieselkraftstoff von einem, vorzugsweise zusätzlichen, Steuergerät (22, 130) geregelt wird.

7. Verfahren nach einem der voranstehenden Ansprüche, **dadurch gekennzeichnet, dass** in einem ersten Arbeitstakt der Emulgiervorrichtung (2, 101) Wasser-Diesel-Emulsion in den ersten Pumpraum (33, 142) angesaugt und aus dem zweiten Pumpraum (36, 145) in den Hauptkanal (30, 139) gefördert wird und in einem zweiten Arbeitstakt der Emulgiervorrichtung Wasser-Diesel-Emulsion aus dem zweiten Pumpraum (36, 145) in den ersten Pumpraum (33, 142) gefördert wird.

8. Emulgiervorrichtung (2, 101) zur Herstellung einer Wasser-Dieselkraftstoff-Emulsion, insbesondere für einen Dieselmotor (1),
**dadurch gekennzeichnet,**
**dass** die Emulgiervorrichtung (2, 101) derart ausgebildet ist, dass Dieselkraftstoff und Wasser einem Hauptkanal (30, 139) zugeführt und strömungsmechanisch vorgemischt werden, wobei die Wasser-Diesel-Mischung aus diesem Hauptkanal (30, 139) in einen Emulgierzylinder, und/oder Pumpraum (33, 142) gesaugt wird und gleichzeitig durch eine Emulgierblende und/oder -drossel (28, 137) in den Hauptkanal (30, 139) zurückströmt.

9. Vorrichtung nach Anspruch 8, **dadurch gekennzeichnet, dass** die Wasser-Diesel-Mischung aus einem zweiten Pumpraum (36, 145) in den Hauptkanal (30, 139) zurückströmt, wobei das Volumen des zweiten Pumpraums (36, 145) höchstens das dreifache und/oder mindestens das zweifache des pro Arbeitstakt maximal einspritzbaren Wasser-Diesel-Emulsionsvolumens beträgt, und/oder dass die Taktfrequenz der Emulgiervorrichtung (2, 101), insbesondere eines hydraulisch angegriebenen Kolbens (27, 136), in Abhängigkeit der eingespritzten Wasser-Diesel-Emulsionsmenge regelbar ist, wobei insbesondere das durch die Emulgierdrossel (28, 137) pro Zeiteinheit geförderte Wasser-Dieselkraftstoff-Emulsionsvolumen mindestens das zweifache und/oder maximal das dreifache des in der gleichen Zeiteinheit eingespritzten Wasser-Dieselkraftstoff-Emulsionsvolumens beträgt

10. Vorrichtung nach Anspruch 8 oder 9, **dadurch gekennzeichnet, dass** zur Emulgierung des Wasser-Kraftstoff-Gemisches ein Druck von mindestens 100 MPa an der Emulgierdrossel (28, 137) vorliegt.

11. Vorrichtung nach einem der Ansprüche 8 bis 10, **dadurch gekennzeichnet, dass** die Emulgiervorrichtung (2, 101) zur Verbesserung der Reaktionszeiten zwischen der Änderung des Wasseranteils in der Emulsion und deren Bereitstellung, möglichst nahe an einem Injektor (6, 104) oder Einspritzventil bzw. einer Einspritzdüse angeordnet ist.

12. Vorrichtung nach einem der Ansprüche 8 bis 11, **dadurch gekennzeichnet, dass** ein Spülventil (20, 124) vorzugsweise direkt vor einem Injektor (6, 104) oder Einspritzventil bzw. einer Einspritzdüse angeordnet und bei Abschalten des Dieselmotors (1) während der Auslaufphase öffenbar ist, so dass in der Emulgiervorrichtung (2, 101) und einer Einspritzleitung (4, 103) vorhandene Wasser-Diesel-emulsion durch nachströmenden Dieselkraftstoff ersetzt wird.

13. Vorrichtung nach einem der Ansprüche 8 bis 12, **dadurch gekennzeichnet, dass** die Emulgiervorrichtung (2, 101) einen Abzweigkanal (31, 140) zum Ansaugen von Wasser-Diesel-Emulsion aus aus dem Hauptkanal (30, 139) in den ersten Pumpenraum (33, 142) und/oder einen Verbindungskanal (34, 143) zur Förderung von Wasser-Diesel-Emulsion zwischen dem ersten Pumpraum (33, 142) und dem zweiten Pumpraum (36, 145) aufweist, vorzugsweise wobei ein Rückschlagventil (35, 144), durch das ein Rückströmen der Wasser-Diesel-Emulsion aus dem zweiten Pumpraum (36, 145) in den ersten Pumpraum (33, 142) verhindert ist und/oder ein Rückschlagventil (32, 141), durch das ein Rückströmen der Wasser-Diesel-Emulsion aus dem ersten Pumpraum (33, 142) in den Hauptkanal (30, 139) verhindert ist, vorgesehen ist.

14. Vorrichtung nach einem der Ansprüche 8 bis 13, **dadurch gekennzeichnet, dass** der erste Pumpraum (33, 142) und der zweite Pumpraum (36, 145) derart, vorzugsweise über einen Kolben (27, 136), mechanisch gekoppelt sind, dass das die Summe der Volumina des ersten Pumpraums (33, 142) und des zweiten Pumpraums (36, 145) während des Betriebs der Emulgiervorrichtung immer konstant bleibt.

15. Vorrichtung nach einem der Ansprüche 8 bis 14, **dadurch gekennzeichnet, dass** der Kolben (27, 136) Gleitringdichtungen (151) aus PTFE aufweist und/oder die mit dem Kolben (27, 136) zusammenwirkenden Zylinderlaufflächen eine CLD-Beschichtung aufweisen.

## Claims

1. Method for operating a diesel engine (1) with a water-diesel fuel emulsion, wherein the water fraction of the water-diesel fuel emulsion is modified or adapted depending on the engine operating point,
**characterized in that,**
the diesel fuel and water are supplied to a main channel (30, 139) in a ratio predetermined by the operating point and are pre-mixed according to fluid mechanics, wherein the water-diesel mixture is sucked out of this main channel (30, 139) to a first pump chamber (33, 142) and simultaneously conveyed back through an emulsifying orifice or throttle (28, 137) from a second pump chamber (30, 139) to the main channel (36, 145).

2. Method according to claim 1, **characterized in that** diesel fuel and water are mixed as close as possible to an injector (6, 104) or injection valve and/or an injection nozzle, preferably in the high pressure part of the injection system (3), in particular to improve or minimize the response times between the change of the water fraction in the emulsion and its provision at the injector (6, 104) and/or at the injection nozzle.

3. Method according to claim 1 or 2, **characterized in that,** upon switching off the diesel engine (1) and during the deceleration phase, in particular due to the opening of a flush valve (20, 124), the water-diesel fuel emulsion present in an emulsifying device (2, 101) and/or an injection line, in particular, the injection line (4, 103) between the emulsifying device (2, 101) and an injector (6, 104), to an injection device (6, 104) or injection valve and/or an injection nozzle is replaced by subsequently flowing diesel fuel.

4. Method according to any one of the preceding claims, **characterized in that** fuel leakage that occurs due to leakage at the injectors (6, 104) or injection valves and/or in-jection nozzles, and/or emulsion fuel, which upon flushing of the emulsifying device (2, 101) and the corresponding injection lines (4, 103) must be removed, is conveyed into a leakage line (38, 125, 156), especially wherein the leakage is separated into anhydrous diesel fuel and water by means of a water separators (21, 126), and preferably is fed back into the respective storage tanks (7, 14).

5. Method according to any one of the preceding claims, **characterized in that** in the case of larger and/or multi-cylinder diesel engines (1), the water diesel fuel emulsion is generated by means of an emulsifying device (2, 101) in front of each injector (6, 104) or injection valve and/or injection nozzle, in particular wherein the dead volume, in particular the fuel line volume, between the emulsifying device (2, 101) and the injector (6, 104) or injection valve and/or injection nozzle is less than half of the maximum injection amount per working cycle.

6. Method according to one of the preceding claims, **characterized in that** the water content in the water-diesel emulsion is regulated by a preferably additional control unit (22, 130), preferably depending on the composition of the water-diesel fuel emulsion contained in a circulation line (155), the engine load (M), rotational speed (D) and/or the cooling water temperature (TK), and/or that the replacement of the water-diesel emulsion by diesel fuel is regulated by a preferably additional control unit (22, 130).

7. Method according to any one of the preceding claims, **characterized in that** in a first working cycle of the emulsifying device (2, 101), the water-diesel emulsion is sucked in the first pump chamber (33, 142) and is conveyed from the second pump chamber (36, 145) into the main channel (30, 139), while in a second working cycle of the emulsifying device, the water-diesel emulsion is conveyed from the second pump chamber (36, 145) into the first pump chamber (33, 142).

8. Emulsifying device (2, 101) for producing a water-diesel fuel emulsion, in particular for a diesel engine (1),
**characterized in that**
the emulsifying device (2, 101) is designed in such a way that diesel fuel and water are supplied to a main channel (30, 139) and pre-mixed according to fluid mechanics, wherein the water-diesel mixture is sucked from this main channel (30, 139) into an emulsifying cylinder and/or pump chamber (33, 142 and, at the same time, flows back to the main channel (30, 139) via an emulsifying orifice and/or throttle (28, 137).

9. Device according to claim 8, **characterized in that** the water-diesel mixture flows back from a second pump chamber (36, 145) to the main channel (30, 139), wherein the volume of the second pump chamber (36, 145) is at most three times and/or at least two times the maximum injectable water-diesel emulsion volume per working cycle, and/or that the cycle frequency of the emulsifying device (2, 101), in particular a hydraulicallydriven piston (27, 136), can be controlled depending on the injected water-diesel emulsion amount, wherein, the water-diesel fuel emulsion volume particularly supplied by the emulsifying throttle (28, 137) per time unit is at least twice and/or at most three times the water-diesel fuel emulsion volume injected within the same time unit.

10. Device according to claim 8 or 9, **characterized in that** a pressure of at least 100 MPa is present at the emulsifying throttle (28, 137) for emulsification of the water-fuel mixture.

11. Device according to one of the claims 8 to 10, **characterized in that** the emulsifying device (2, 101) is arranged as close as possible to an injector (6, 104) or injection valve and/or an injection nozzle in order to improve the response times between the change of the water fraction in the emulsion and its provision.

12. Device according to one of the claims 8 to 11, **characterized in that** a flush valve (20, 124) is preferably arranged directly in front of an injector (6, 104) or an injection valve and/or an injection nozzle and can be opened upon shutdown of the diesel engine (1) during the deceleration phase, so that the water-diesel emulsion in the emulsifying device (2, 101) and an injection line (4, 103) is replaced by subsequently flowing diesel fuel.

13. Device according to one of the claims 8 to 12, **characterized in that** the emulsifying device (2, 101) has a branch channel (31, 140) to suck water-diesel emulsion (30, 139) from the main channel (30, 139) to the first pump chamber (33, 142) and/or a connecting channel (34, 143) to convey the water-diesel emulsion between the first pump chamber (33, 142) and the second pump chamber (36, 145), preferably wherein a non-return valve (35, 144) which prevents a backflow of the water-diesel emulsion from the second pump chamber (36, 145) to the first pump chamber (33, 142), and/or a non-return valve (32, 141) which prevents a backflow of water-diesel emulsion from the first pump chamber (33, 142) to the main channel (30, 139) is provided.

14. Device according to one of the claims 8 to 13, **characterized in that** the first pump chamber (33, 142) and the second pump chamber (36, 145) are mechanically coupled, preferably via a piston (27, 136), in such a way that the sum of the volumes of the first pump chamber (33, 142) and the second pump chamber (36, 145) always remains constant during operation of the emulsifying device.

15. Device according to one of the claims 8 to 14, **characterized in that** the piston (27, 136) has seal rings (151) made of PTFE and/or the cylinder contact surfaces interacting with the piston (27, 136) have a CLD coating.

## Revendications

1. Procédé d'exploitation d'un moteur diesel (1) avec une émulsion eau-carburant diesel, la teneur en eau de l'émulsion eau-carburant diesel étant modifiée ou adaptée en fonction du point de fonctionnement du moteur,
**caractérisé en ce que**
le carburant diesel et l'eau sont introduits, dans un rapport de quantité prédéterminé par le point de fonctionnement, dans un canal principal (30, 139) et pré-mélangés à l'aide d'un mécanisme d'écoulement, le mélange eau-carburant diesel étant aspiré hors de ce canal principal (30, 139) vers une première chambre de pompe (33, 142) et simultanément refoulé à travers un diaphragme ou un étranglement d'émulsification (28, 137) hors d'une deuxième chambre de pompe (30, 139) vers le canal principal (36, 145).

2. Procédé selon la revendication 1, **caractérisé en ce que** le carburant diesel et l'eau sont mélangés le plus près possible d'un injecteur (6, 104) ou d'une soupape d'injection ou d'une buse d'injection, de préférence dans une partie de haute pression du système d'injection (3), plus particulièrement pour améliorer ou réduire les temps de réaction entre la modification de la teneur en eau dans l'émulsion et sa mise à disposition au niveau de l'injecteur (6, 104) ou au niveau de la buse d'injection.

3. Procédé selon la revendication 1 ou 2, **caractérisé en ce que**, lors de l'arrêt du moteur diesel (1), pendant la phase d'inertie, l'émulsion eau-carburant diesel présente dans un dispositif d'émulsification (2, 101) et/ou une conduite d'injection, plus particulièrement la conduite d'injection (4, 103) entre le dispositif d'émulsification (2, 101) et un injecteur (6, 104), vers un injecteur (6, 104) ou soupape d'injection ou une buse d'injection, est remplacée par du carburant diesel s'écoulant après, plus particulièrement du fait de l'ouverture d'une soupape de rinçage (20, 124).

4. Procédé selon l'une des revendications précédentes, **caractérisé en ce que** les fuites de carburant dues à des défauts d'étanchéité au niveau des injecteurs (6, 104) ou des soupapes d'injection ou des buses d'injection et/ou le carburant à émulsion qui doit être évacué lors du rinçage du dispositif d'émulsification (2, 101) et des conduites d'injection (4, 103) correspondantes, sont guidées vers une conduite de fuites (38, 125, 156), plus particulièrement, la fuite étant séparée, à l'aide d'un séparateur d'eau (21, 126), en carburant diesel sans eau et en eau et, de préférence retournée dans les réservoirs (7, 14) correspondants.

5. Procédé selon l'une des revendications précédentes, **caractérisé en ce que**, dans le cas de moteurs diesel très grands et/ou à plusieurs cylindres (1), l'émulsion eau-carburant diesel est produite à l'aide d'un dispositif d'émulsification (2, 101) avant chaque injecteur (6, 104) ou soupape d'injection ou de chaque buse d'injection, plus particulièrement le volume mort, plus particulièrement le volume de la conduite de carburant, entre le dispositif d'émulsification (2, 101) et l'injecteur (6, 104) ou soupape d'injection ou buse d'injection étant inférieur à la moitié de la quantité d'injection maximale par cycle de fonctionnement.

6. Procédé selon l'une des revendications précédentes, **caractérisé en ce que** la teneur en eau de l'émulsion eau-carburant diesel est régulée, de préférence en fonction de la composition de l'émulsion eau-carburant diesel se trouvant dans une conduite circulaire (155), de la charge du moteur (M), de la vitesse de rotation (D) et/ou de la température de l'eau de refroidissement (TK) et/ou du remplacement de l'émulsion eau-carburant diesel par du carburant diesel, par un appareil de commande (22, 30), de préférence supplémentaire.

7. Procédé selon l'une des revendications précédentes, **caractérisé en ce que**, dans un premier cycle de fonctionnement du dispositif d'émulsification (2, 101), l'émulsion eau-diesel est aspirée dans la première chambre de pompe (33, 142) et est refoulée hors de la deuxième chambre de pompe (36, 145) vers le canal principal (30, 139) et, dans un deuxième cycle de travail du dispositif d'émulsification, l'émulsion eau-carburant diesel est refoulée hors de la deuxième chambre de pompe (36, 145) vers la première chambre de pompe (33, 142).

8. Dispositif d'émulsification (2, 101) pour la fabrication d'une émulsion eau-carburant diesel, plus particulièrement pour un moteur diesel (1),
**caractérisé en ce que**
le dispositif d'émulsification (2, 101) est conçu de façon à ce que le carburant diesel et l'eau sont introduits dans un canal principal (30, 139) et pré-mélangés à l'aide d'un mécanisme d'écoulement, le mélange eau-carburant diesel étant aspiré hors de ce canal principal (30, 139) vers un cylindre d'émulsification et/ou une chambre de pompe (33, 142) et simultanément retournant à travers un diaphragme et/ou un étranglement d'émulsification (28, 137) vers le canal principal (30, 139).

9. Dispositif selon la revendication 8, **caractérisé en ce que** le mélange eau-carburant diesel s'écoule hors d'une deuxième chambre de pompe (36, 145) vers le canal principal (30, 139), le volume de la deuxième chambre de pompe (36, 145) représentant au maximum le triple et/ou au moins le double du volume d'émulsion eau-carburant diesel pouvant être injecté au maximum par cycle de fonctionnement et/ou **en ce que** la fréquence du dispositif d'émulsification (2, 101), plus particulièrement d'un piston hydraulique (27, 136) peut être régulée en fonction de la quantité d'émulsion eau-carburant diesel injectée, plus particulièrement le volume d'émulsion eau-carburant diesel refoulé à travers l'étranglement d'émulsification (28, 137) par unité de temps représentant au moins le double et/ou au maximum le triple du volume d'émulsion eau-carburant diesel injecté par la même unité de temps.

10. Dispositif selon la revendication 8 ou 9, **caractérisé en ce que**, pour l'émulsification du mélange eau-carburant diesel, une pression d'au moins 100 MPa règne au niveau de l'étranglement d'émulsification (28, 137).

11. Dispositif selon l'une des revendications 8 à 10, **caractérisé en ce que** le dispositif d'émulsification (2, 101) est disposé le plus près possible d'un injecteur (6, 104) ou d'une soupape d'injection ou d'une buse d'injection afin d'améliorer les temps de réaction entre la modification de la teneur en eau dans l'émulsion et sa mise à disposition.

12. Dispositif selon l'une des revendications 8 à 11, **caractérisé en ce qu'**une soupape de rinçage (20, 124) est disposé de préférence directement avant un injecteur (6, 104) ou soupape d'injection ou une buse d'injection et peut être ouverte lors de l'arrêt du moteur diesel (1) pendant la phase d'inertie, de façon à ce que, dans le dispositif d'émulsification (2, 101) et une conduite d'injection (4, 103), l'émulsion eau-carburant diesel est remplacée par du carburant diesel s'écoulant ultérieurement.

13. Dispositif selon l'une des revendications 8 à 12, **caractérisé en ce que** le dispositif d'émulsification (2, 101) comprend un canal de dérivation (31, 140) pour l'aspiration de l'émulsion eau-carburant diesel hors du canal principal (30, 139) vers la première chambre de pompe (33, 142) et/ou un canal de liaison (34, 143) pour le transport de l'émulsion eau-carburant diesel entre la première chambre de pompe (33, 142) et la deuxième chambre de pompe (36, 145), de préférence un clapet anti-retour (35, 144), qui empêche un retour de l'émulsion eau-diesel de la deuxième chambre de pompe (36, 145) vers la première chambre de pompe (33, 142) et/ou un clapet anti-retour (32, 141), qui empêche un retour de l'émulsion eau-diesel de la première chambre de pompe (33, 142) vers le canal principal (30, 139), sont prévus.

14. Dispositif selon l'une des revendications 8 à 13, **caractérisé en ce que** la première chambre de pompe (33, 142) et la deuxième chambre de pompe (36, 145) sont couplés mécaniquement, de préférence par l'intermédiaire d'un piston (27, 136), de façon à ce que la somme des volumes de la première chambre de pompe (33, 142) et de la deuxième chambre de pompe (36, 145) reste toujours constante pendant le fonctionnement du dispositif d'émulsification.

15. Dispositif seicn l'une des revendications 8 à 14, **caractérisé en ce que** le piston (27, 136) comprend des garnitures d'étanchéité mécaniques (151) en PTFE et/ou un revêtement CLD sur les surfaces de frottement des cylindres interagissant avec les pistons (27, 136).
